# EUROPEAN PATENT APPLICATION

(11) **EP 4 803 889 A1**
(43) Date of publication of application: **09.09.2026**
(21) Application number: 25203144.8
(22) Date of filing: 18.09.2025
(51) Int. Cl.: G01N 21/88

(54) **OPTICAL INSPECTION APPARATUS, OPTICAL INSPECTION SYSTEM, OPTICAL INSPECTION METHOD, AND OPTICAL INSPECTION PROGRAM**

(30) Priority: 06.03.2025 JP 2025035917
(71) Applicant: KABUSHIKI KAISHA TOSHIBA, Kawasaki-shi, Kanagawa (JP); Toshiba Information Systems (Japan) Corporation, Kawasaki-shi, Kanagawa 210-8540 (JP)
(72) Inventor: Kano, Hiroya, Kawasaki-shi, Kanagawa (JP); Ohno, Hiroshi, Kawasaki-shi, Kanagawa (JP); Okano, Hideaki, Kawasaki-shi, Kanagawa (JP); Ohno, Akifumi, Kawasaki-shi, Kanagawa (JP)
(74) Representative: Hoffmann Eitle

(57) **Abstract**

In an approach, an optical inspection apparatus includes: an imaging portion and an illumination portion. The imaging portion acquires a plurality of images by repeatedly photographing an object on an optical axis of the imaging portion, the object moving relative to the optical axis in a moving direction that is a predetermined axial direction, in such a manner as to cross the optical axis. The illumination portion radiates, in a plane including the optical axis of the imaging portion and the moving direction, at a time of imaging by the imaging portion, first illumination light at a first object point on a surface of the object, and second illumination light traveling in a direction different from the first illumination light at a second object point different from the first object point, a distribution of the first illumination light and the second illumination light being asymmetric in the plane.

## Description

### FIELD

The present disclosure relates to an optical inspection apparatus, an optical inspection system, an optical inspection method, and an optical inspection program.

### BACKGROUND

In various industrial fields, there is a demand for non-contact inspection of the surface of an object being conveyed. For example, there is a method of irradiating an object being conveyed with illumination light, capturing an image of a surface of the object with light reflected from the surface of the object by using an imaging portion, and analyzing the captured image, thereby inspecting the surface of the object.

### BRIEF DESCRIPTION OF THE DRAWINGS

FIG. 1 is a schematic diagram illustrating an optical inspection system.
FIG. 2 is a schematic diagram illustrating an illumination portion of the optical inspection system.
FIG. 3 is a schematic diagram illustrating a subject in the shape of a flat plate being conveyed by a conveyor portion of the optical inspection system, an optical inspection apparatus configured to optically acquire an image of the subject, and illumination light toward a surface of the subject in a ZX plane.
FIG. 4(A) to FIG. 4(C) are respectively schematic diagrams illustrating fan-shaped illumination light in the optical inspection system, a subject illuminated by the illumination light, and directions of reflection light from the subject toward the imaging portion.
FIG. 5(A) to FIG. 5(C) are respectively schematic diagrams illustrating illumination light parallel to the optical axis of the imaging portion in the optical inspection system, a subject illuminated by the illumination light, and directions of reflection light from the subject toward the imaging portion.
FIG. 6 is a schematic diagram illustrating the subject, the optical inspection apparatus, and the illumination light toward the surface of the subject in an YZ plane, as viewed from a direction denoted by a mark VI in FIG. 3.
FIG. 7 is a schematic diagram different from FIG. 6, illustrating the subject, the optical inspection apparatus, and the illumination light toward the surface of the subject in the YZ plane, as viewed from the direction denoted by the mark VI in FIG. 3.
FIG. 8(A) is a schematic diagram illustrating images, which can be acquired at suitable time intervals by the optical inspection apparatus illustrated in FIGS. 3 and 6, FIG. 8(B) illustrates images obtained by shifting and rearranging the images in FIG. 8(A), and FIG. 8(C) illustrates a single surface composition image of the subject constructed based on the images illustrated in FIG. 8(B).
FIG. 9 is a flowchart for constructing a single surface composition image of the subject using the optical inspection system.
FIG. 10 is a schematic diagram illustrating a state in which images, which can be acquired at suitable time intervals, are suitably shifted and rearranged in the flowchart illustrated in FIG. 9.

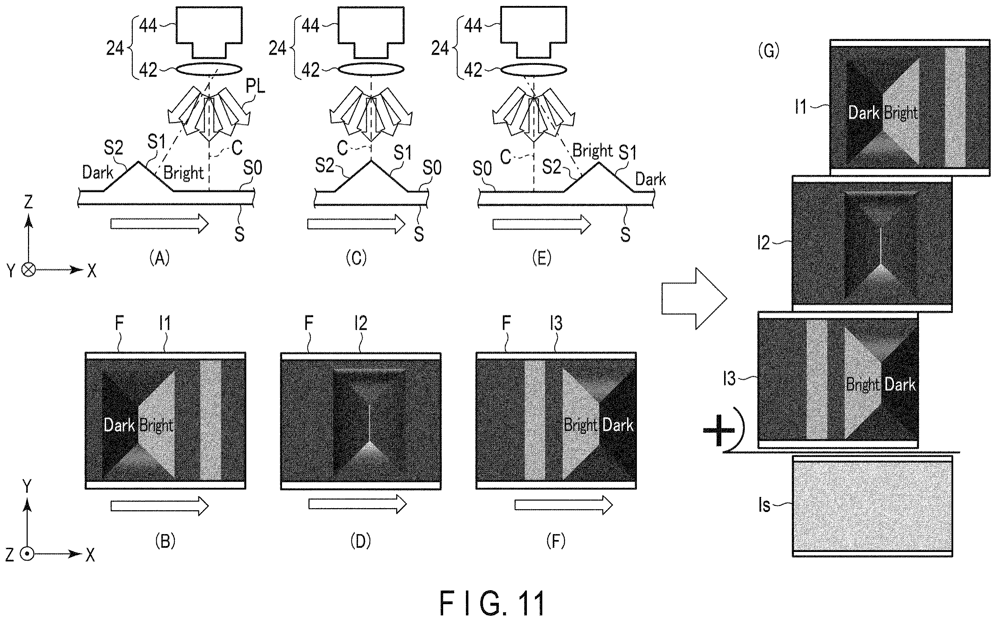

FIG. 11(A) is a schematic diagram illustrating a subject being conveyed by the conveyor portion of the optical inspection system, the optical inspection apparatus configured to optically acquire an image of the subject, and illumination light toward the surface of the subject in the ZX plane, FIG. 11(B) illustrates an example of an image acquired by the illumination light and the imaging portion illustrated in FIG. 11(A), FIG. 11(C) is a schematic diagram illustrating a state in which the subject has been moved in a +X axis direction relative to FIG. 11(A), FIG. 11(D) illustrates an example of an image acquired by the illumination light and the imaging portion illustrated in FIG. 11(C), FIG. 11(E) is a schematic diagram illustrating a state in which the subject has been moved in the +X axis direction relative to FIG. 11(C), FIG. 11(F) illustrates an example of an image acquired by the illumination light and the imaging portion illustrated in FIG. 11(E), and FIG. 11(G) illustrates an example of an entire image acquired by superimposing the images.

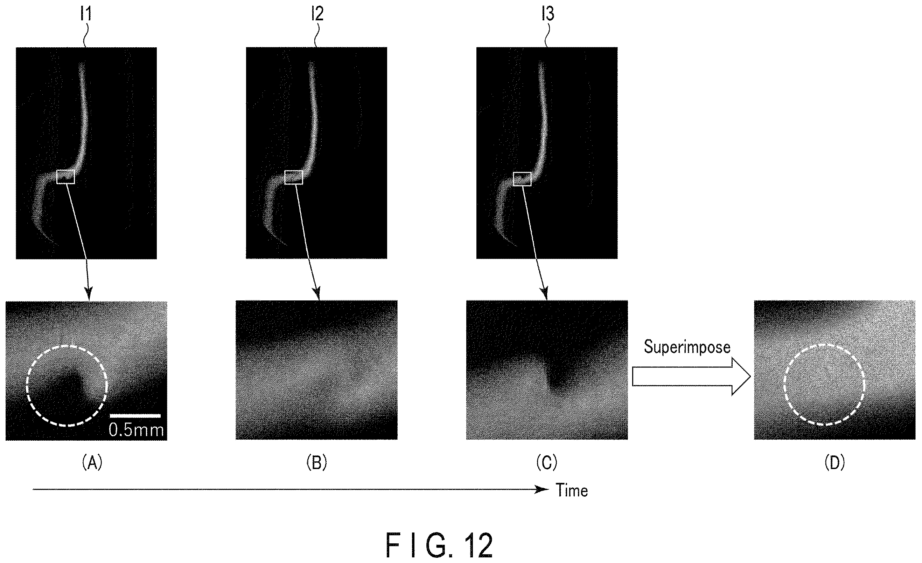

FIG. 12(A) illustrates an example of an image captured by using the optical inspection system, and an enlarged view of the image, FIG. 12(B) illustrates an example of an image captured by using the optical inspection system in a state in which the subject has been moved in the +X axis direction relative to FIG. 12(A), and an enlarged view of the image, FIG. 12(C) illustrates an example of an image captured by using the optical inspection system in a state in which the subject has been moved in the +X axis direction relative to FIG. 12(B), and an enlarged view of the image, and FIG. 12(D) illustrates an example of an entire image of an enlarged view acquired by superimposing the enlarged views.
FIG. 13 is a flowchart for constructing a single surface composition image of the subject using the optical inspection system.
FIG. 14 is a schematic diagram illustrating an optical inspection system according to a first approach.

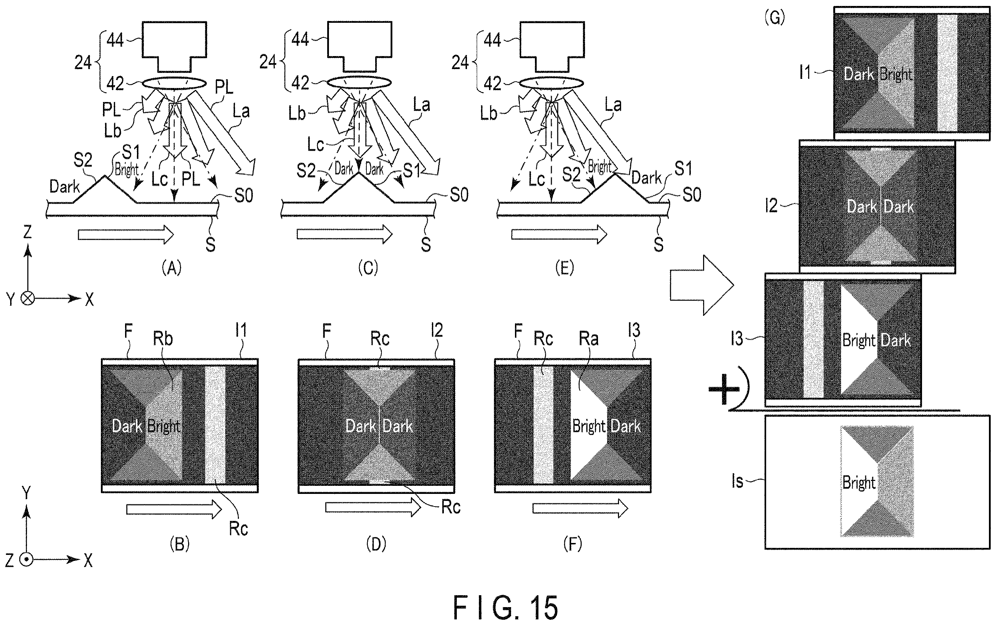

FIG. 15(A) is a schematic diagram illustrating a subject being conveyed by a conveyor portion of the optical inspection system according to the first approach, an optical inspection apparatus configured to optically acquire an image of the subject, and illumination light toward the surface of the subject in the ZX plane, FIG. 15(B) illustrates an example of an image acquired by the illumination light and the imaging portion illustrated in FIG. 15(A), FIG. 15(C) is a schematic diagram illustrating a state in which the subject has been moved in the +X axis direction relative to FIG. 15(A), FIG. 15(D) illustrates an example of an image acquired by the illumination light and the imaging portion illustrated in FIG. 15(C), FIG. 15(E) is a schematic diagram illustrating a state in which the subject has been moved in the +X axis direction relative to FIG. 15(C), FIG. 15(F) illustrates an example of an image acquired by the illumination light and the imaging portion illustrated in FIG. 15(E), and FIG. 15(G) illustrates an example of an entire image acquired by superimposing the images.

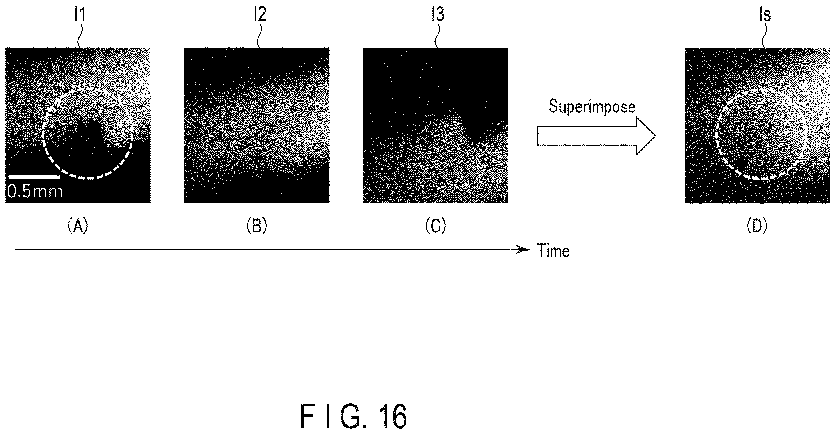

FIG. 16(A) is an enlarged view of an image captured by using the optical inspection system according to the first approach, FIG. 16(B) is an enlarged view of an image captured by using the optical inspection system in a state in which the subject has been moved in the +X axis direction relative to FIG. 16(A), FIG. 16(C) is an enlarged view of an image captured by using the optical inspection system in a state in which the subject has been moved in the +X axis direction relative to FIG. 16(B), and FIG. 16(D) illustrates an example of an entire image of an enlarged view acquired by superimposing the enlarged views.
FIG. 17 is a schematic diagram illustrating an illumination portion of an optical inspection system according to a modification of the first approach.
FIG. 18 is a schematic diagram illustrating an imaging portion in an optical inspection system according to a second approach, fan-shaped illumination light (collimated light), and a subject illuminated by the illumination light.
FIG. 19 is a schematic diagram illustrating an illumination portion of the optical inspection system according to the second approach.
FIG. 20 is a schematic diagram illustrating an imaging portion in an optical inspection system according to a third approach, fan-shaped illumination light (collimated light), and a subject illuminated by the illumination light.
FIG. 21 is a schematic diagram illustrating an illumination portion of the optical inspection system according to the third approach.

### DETAILED DESCRIPTION

Hereinafter, approaches are described with reference to the accompanying drawings. The drawings are schematic or conceptual ones, and the relationship between the thickness and width of each of parts illustrated in the drawings, and the ratio in size between the parts, and the like, do not necessarily coincide with the actual ones. Even in a case where identical parts are depicted, the parts may be depicted with different dimensions and ratios between the drawings. In the present specification and drawings, the elements similar to those described in connection with preceding drawings are denoted by like reference signs, and a detailed description thereof is omitted unless where necessary.

It is an object of an approach to provide an optical inspection apparatus, an optical inspection system, an optical inspection method, and an optical inspection program, which can inspect the surface of an object that relatively moves and includes various surface shapes.

According to the approach, an optical inspection apparatus includes an imaging portion defining an optical axis and configured to acquire a plurality of images by repeatedly photographing an object on the optical axis, the object moving relative to the optical axis in a moving direction that is a predetermined axial direction, in such a manner as to cross the optical axis; and an illumination portion configured to radiate, in a plane including the optical axis of the imaging portion and the moving direction, at a time of imaging by the imaging portion, first illumination light at a first object point on a surface of the object, and second illumination light traveling in a direction different from the first illumination light at a second object point different from the first object point, a distribution of the first illumination light and the second illumination light being asymmetric in the plane.

In the present approach, light is a kind of electromagnetic wave, and includes X-rays, ultraviolet, visible light, infrared, microwaves, and the like. In the approaches to be described below, it is assumed that the light is visible light, and belongs to a wavelength region of, for example, 400 nm to 750 nm.

### (Introduction)

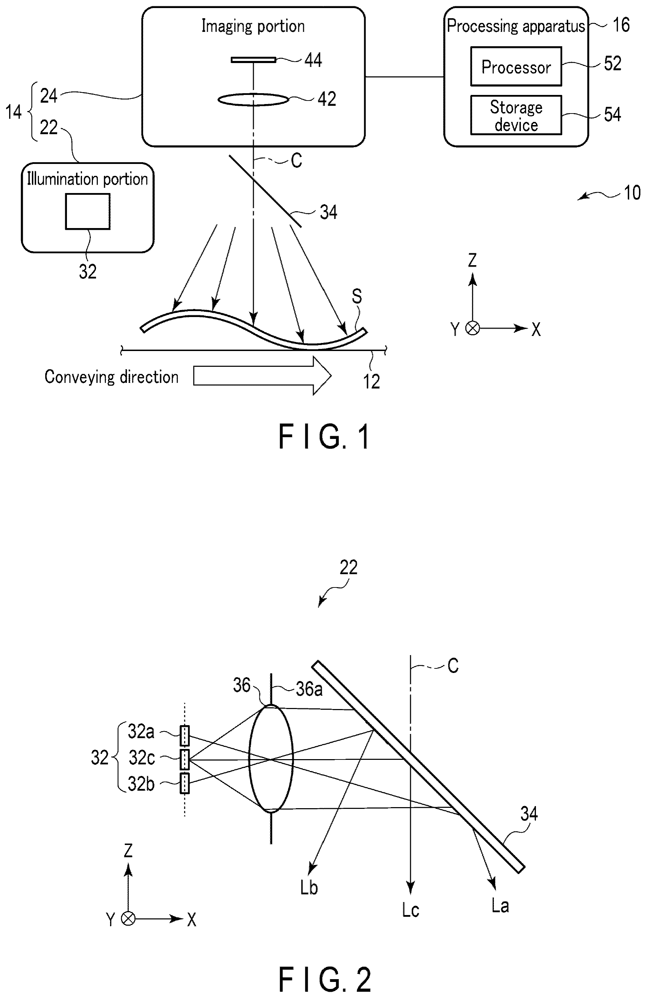

As an introduction, an example of a basic optical inspection system 10 is described with reference to FIG. 1 to FIG. 13.

FIG. 1 illustrates an optical inspection system 10. As illustrated in FIG. 1, the optical inspection system 10 includes a conveyor portion 12 configured to convey a subject (sample) S that is an object of an inspection target, an optical inspection apparatus 14 configured to optically acquire an image of the subject S that is conveyed, and a processing apparatus (controller) 16 connected to the optical inspection apparatus 14 in either a wired manner or a wireless manner.

Here, an XYZ orthogonal coordinate system illustrated in FIG. 1 is defined for the conveyor portion 12 and the optical inspection apparatus 14. It is assumed that an X axis is a direction in which the subject S is moved by the conveyor portion 12 relative to the optical inspection apparatus 14. It is assumed herein that the right side on the drawing sheet of FIG. 1 is a +X axis direction, and this +X axis direction is defined as a moving direction of one axial direction of the subject S. A Y axis is orthogonal to the X axis, and defines, together with the X axis, a plane parallel to a floor surface. It is assumed herein that a direction toward the far side on the drawing sheet of FIG. 1 is a +Y axis direction. It is assumed that a Z axis is orthogonal to the X and Y axes, and that the upward direction, for example, is a +Z axis direction.

The conveyor portion 12 has a suitable width along the Y-axis direction, and is configured to convey the subject S in one direction such as the +X axis direction. It is preferable that the conveyor portion 12 moves the subject S in the +X axis direction at a predetermined conveying speed. It is also preferable that the Z-axis coordinate of the conveyor portion 12 is constant at a position where an inspection is performed by the optical inspection apparatus 14, and that the height of the subject S does not change. The conveyor portion 12 is controlled by the processing apparatus 16 to be described later.

The term "conveying" refers to movement of the subject S relative to the optical inspection apparatus 14 that is configured to irradiate the subject S with irradiation light and to acquire a plurality of images of the subject S. For example, the subject S may be moved relative to the optical inspection apparatus 14 in a stationary state, the optical inspection apparatus 14 may be moved relative to the subject S in a stationary state, or both of them may be moved. That is, any configuration may be adopted as long as the subject S is moved relative to the optical inspection apparatus 14. The conveyor portion 12 may be used to convey the subject S, or may be used to convey the optical inspection apparatus 14.

Moreover, the movement of the subject S relative to the optical inspection apparatus 14 may be either continuous or intermittent. For example, both of the optical inspection apparatus 14 and the subject S may be in a stationary state at the moment when the optical inspection apparatus 14 acquires an image, or both of the optical inspection apparatus 14 and the subject S may be moving relative to each other at the moment when an image is acquired. That is, the optical inspection apparatus 14 may move in any manner as long as the subject S that moves relative thereto can be photographed.

Here, it is assumed, for example, that the subject S is moved at a predetermined speed by the conveyor portion 12 relative to the optical inspection apparatus 14 in a stationary state, and that a surface of the subject S that has come into the field of view of the optical inspection apparatus 14 is captured multiple times by an imaging portion 24, to be described later, of the optical inspection apparatus 14.

The optical inspection apparatus 14 includes an illumination portion 22 configured to illuminate the subject S with illumination light, and an imaging portion (camera) 24. The illumination portion 22 and the imaging portion 24 of the optical inspection apparatus 14 are controlled by the processing apparatus 16, as will be described later.

The illumination portion 22 includes a light source portion 32. The light source portion 32 illuminates the surface of the subject S with light diverging from an optical axis C of the imaging portion 24. Such illumination light may be generated by using either a lens or a reflector. It suffices that light is incident on the surface of the subject S at an incident angle that varies according to the position of the subject S in the field of view provided by the imaging portion 24 during a certain period of time.

FIG. 2 is a schematic diagram of the illumination portion 22 taken along a ZX plane. As illustrated in FIG. 2, the light source portion 32 includes, for example, light-emitting diodes (LEDs) 32a, 32b, and 32c as light sources aligned along the Z axis, and emits, for example, white light in the +X axis direction. The number of the light sources (32a, 32b, and 32c) is not limited to three, and may be suitably set. The light source portion 32 is not limited to the light sources 32a, 32b, and 32c, and may be an incandescent light bulb, a fluorescent tube, a mercury-vapor lamp, or the like. The color of light emitted by the light source portion 32 is not limited to white. In addition, the light source portion 32 may be disposed on the optical axis C of the imaging portion 24, or may not be disposed on the optical axis C. If the light source portion 32 is not disposed on the optical axis C of the imaging portion 24, a beam splitter 34 such as a half mirror (semitransparent mirror) may be used to allow the subject to be illuminated with light emitted from the light source portion 32 via the beam splitter 34. The beam splitter 34 may be either a polarizing beam splitter, or a non-polarizing beam splitter.

Here, it is assumed that the illumination portion 22 includes the light source portion 32, the half mirror 34, and an illumination lens 36, and that light from the light source portion 32 passes through the illumination lens 36, is reflected from the half mirror 34, and travels toward the surface of the subject S.

The illumination lens 36 is disposed between the light source portion 32 and the half mirror 34. It is preferable that the light source portion 32 is disposed on a focal plane of the illumination lens 36. As the illumination lens 36, a cylindrical lens, a freeform surface lens, a Fresnel lens, a concave mirror, or the like may be used. The illumination lens 36 converts light from each of the light sources 32a, 32b, and 32c into collimated light PL in the ZX plane. In addition, in the ZX plane, the illumination light traveling in the +X axis direction, which is converted into the collimated light PL through the illumination lens 36 from the light source 32c, is reflected by the half mirror 34, and travels in the -Z axis direction as the collimated light PL along illumination light Lc on the optical axis C of the imaging portion 24. Illumination light La traveling in the +X axis direction, which is converted into the collimated light through the illumination lens 36 from the light source 32a, is reflected by the half mirror 34, and travels in a different direction at a different position from the illumination light Lc in the ZX plane. Illumination light Lb traveling in the +X axis direction, which is converted into the collimated light through the illumination lens 36 from the light source 32b, is reflected by the half mirror 34, and travels in a different direction at a different position from the illumination lights La and Lc in the ZX plane. If it is assumed that the optical axis C of the imaging portion 24 coincides with the Z axis, the illumination light La travels in the +X axis direction and -Z axis direction, the illumination light Lb travels in the -X axis direction and -Z axis direction, and the illumination light Lc travels in the -Z axis direction.

Note that it is preferable that a shield portion 36a is provided on the +Z axis direction side and on the -Z axis direction side of the illumination lens 36, and unintended incidence of light on the half mirror 34 and subject S from the light source portion 32 is prevented.

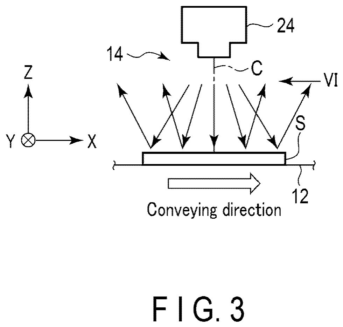

FIG. 3 is a schematic diagram illustrating a subject S in the shape of a flat plate being conveyed by the conveyor portion 12 of the optical inspection system 10 illustrated in FIG. 1, the imaging portion (camera) 24 of the optical inspection apparatus 14 configured to optically acquire an image of the subject S, and illumination light in the ZX plane. In FIG. 3, the depiction of the illumination portion 22 illustrated in FIG. 2 is omitted.

The illumination portion 22 illuminates illumination lights, as collimated lights PL traveling in different directions in at least one plane (ZX plane), on the surface of the subject S. Note that the light sources 32a, 32b and 32c of the light source portion 32 are turned on at an identical timing. The illumination portion 22 may be configured such that the light source portion 32, which can emit illumination light PL that can be substantially regarded as collimated light, is disposed on the optical axis C of the imaging portion 24, and the illumination portion 22 illuminates the illumination light PL on the surface of the subject S.

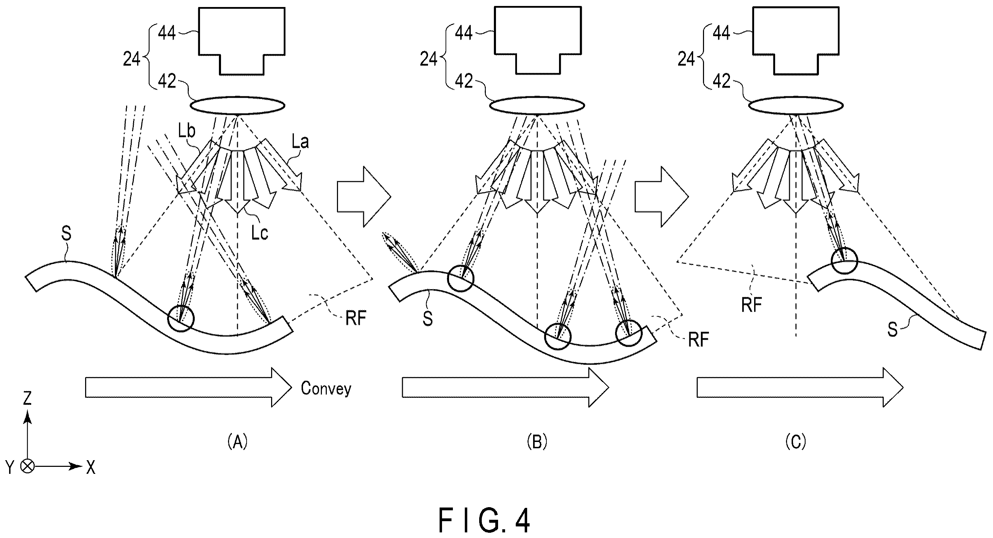

As illustrated in parts (A) to (C) of FIG. 4, the illumination light of the collimated light PL from the illumination portion 22 spreads in a fan shape as a whole as the illumination light along the ZX plane, and is illuminated on the subject S. In parts (A) to (C) of FIG. 4, an outer edge of a radiation field RF in the ZX plane is indicated by a broken line. At a time when the reflection light of the illumination light La travels in an opposite direction to the direction in which the illumination light La travels toward the subject S, or in a direction in the vicinity of this opposite direction, at a time when the reflection light of the illumination light Lb travels in an opposite direction to the direction in which the illumination light Lb travels toward the subject S, or in a direction in the vicinity of this opposite direction, and at a time when the reflection light of the illumination light Lc travels in an opposite direction to the direction in which the illumination light Lc travels toward the subject S, or in a direction in the vicinity of this opposite direction, these reflection lights are imaged by the imaging portion 24 through the half mirror 34.

As illustrated in parts (A) to (C) of FIG. 4, in a case where the surface of the subject S (the surface on the imaging portion 24 side) includes a suitable curved surface and the illumination light is radiated at least once on the surface of the subject S while the subject S is being moved by the conveyor portion 12 at a predetermined speed in the +X axis direction, if the subject S is imaged at a suitable frame rate, there is a high possibility that the surface of the subject S is imaged at least once along the X-axis direction, and successive images (for example, an entire image of the subject S) can be acquired.

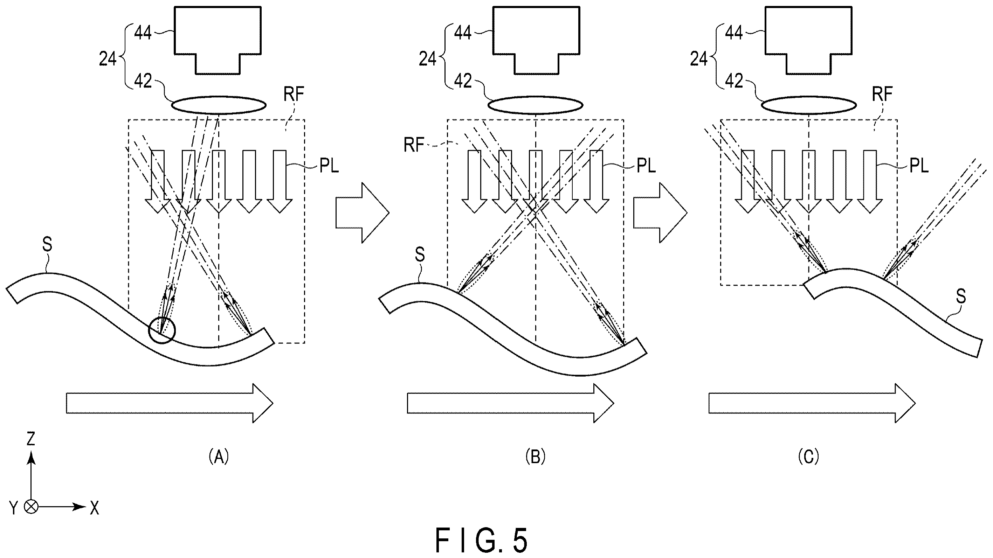

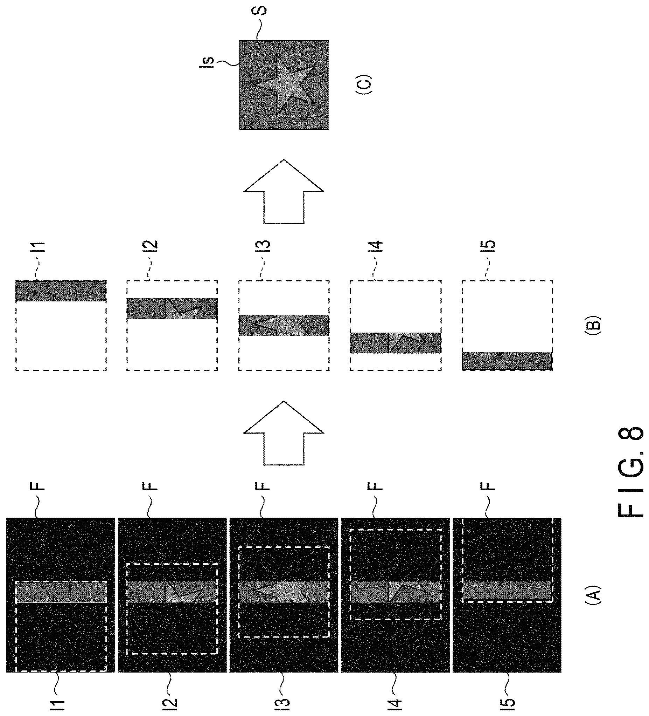

For example, as illustrated in parts (A) to (C) of FIG. 5, a case is now considered in which illumination lights (collimated lights) PL that are parallel to the optical axis C are radiated on the subject S having a curved surface and the image of the subject S is captured by the imaging portion 24. Depending on the direction of the surface of the subject S, there may occur a case where reflection light of some of the illumination lights PL that are the collimated lights is not imaged by the imaging portion 24 through the half mirror 34. In the case where the subject S has a curved surface, if the subject S is imaged at a suitable frame rate while the subject S is being moved by the conveyor portion 12 at a predetermined speed in the +X axis direction, there is a possibility that a part of the subject S, which has not even once been photographed along the X-axis direction, occurs. Thus, as illustrated in FIG. 8 to be described later, even if images are shifted, there may be a case where a continuous image (entire image) cannot be acquired.

Therefore, it is more appropriate to use the fan-shaped illumination lights of collimated lights PL in the optical inspection apparatus 14, as illustrated in parts (A) to (C) of FIG. 4, than to use lights each being parallel to the optical axis C of the imaging portion 24, as illustrated in parts (A) to (C) of FIG. 5.

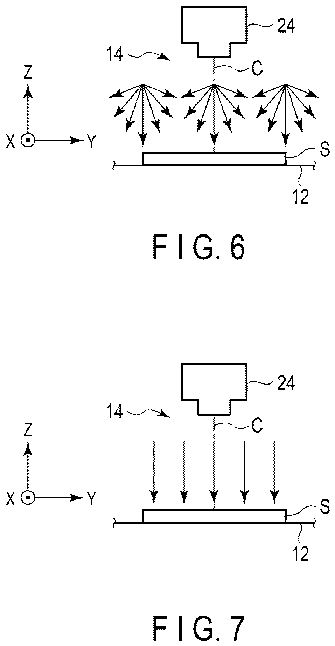

FIG. 6 is a schematic diagram illustrating the subject S, optical inspection apparatus 14, and illumination light in the YZ plane, as viewed from a direction denoted by the mark VI in FIG. 3. FIG. 7 is a schematic diagram different from FIG. 6, illustrating the subject S, optical inspection apparatus 14, and illumination light in the YZ plane, as viewed from the direction denoted by the mark VI in FIG. 3. In FIG. 6 and FIG. 7, illustration of the illumination portion 22 is omitted.

As illustrated in FIG. 6, an example of the illumination light in the YZ plane is diffusion light. As illustrated in FIG. 7, another example of the illumination light in the YZ plane is collimated light parallel to the Z axis. Although the illumination light in the YZ plane may be either diffusion light or collimated light, it is assumed in the description below that the illumination light in the YZ plane is the diffusion light illustrated in FIG. 6.

The imaging portion 24 defines the optical axis C, and can acquire a plurality of images by repeatedly photographing the subject (object) S on the optical axis C, which relatively moves in the moving direction that is a predetermined axial direction, in such a manner as to cross the optical axis C. As illustrated in FIG. 1, the imaging portion 24 includes, for example, an image forming optical element 42, and an image sensor 44.

The image forming optical element 42 may be a single lens or multiple lenses, and may be, as necessary, a combination of a lens and a mirror. The image forming optical element 42 may have any configuration if it can form an image of light.

The image sensor 44 acquires a plurality of images I1, I2,..., and In (where n is an integer of 2 or more) formed by the image forming optical element 42, for example, at a suitable frame rate. It is preferable, for example, that the image sensor 44 can spectrally separate light and obtain RGB lights in each pixel. The image sensor 44 includes, for example, nₘ+1 (where nₘ is a natural number) pixels in the X-axis direction, and mₘ+1 (where mₘ is a natural number) pixels in the Y-axis direction. The image sensor 44 operates to acquire a suitable image in the field of view at a suitable frame rate controlled by the processing apparatus 16. Note that the frame rate may be adjusted by, for example, a conveying speed of the subject S by the conveyor portion 12.

It is assumed that each pixel is configured to receive light beams of at least two different wavelengths, namely, a light beam of a first wavelength and a light beam of a second wavelength. It is assumed that a plane including a region in which the image sensor 44 is arranged is an image surface of the image forming optical element 42. The image sensor 44 may be either an area sensor or a line sensor. An area sensor is a sensor in which pixels are planarly arrayed in the same plane. A line sensor is a sensor in which pixels are linearly arrayed. Each of the pixels may include three color channels of R, G, and B. It is assumed here that the image sensor 44 is an area sensor, and that each pixel includes three color channels of red, blue, and green.

The processing apparatus 16 can control the conveyor portion 12, and the light source portion 32 and the image sensor 44 of the optical inspection apparatus 14. The processing apparatus 16 can control the conveyor portion 12, and can cause the conveyor portion 12 to convey the subject S in a predetermined direction at a proper speed. The processing apparatus 16 can control the light source portion 32, and can control ON/OFF of light emission of the light sources 32a, 32b and 32c to the subject S. The processing apparatus 16 can control the image sensor 44 in interlock with the light source portion 32, and can cause the image sensor 44 to acquire the image of the surface of the subject S. The processing apparatus 16 includes a processor 52 configured to hold images captured by the imaging portion 24 and perform image processing on the images, to be described later, and a storage device 54 for storing images.

The processor 52 is, for example, a CPU or a GPU, but may be any element configured to perform image processing, to be described later. The processor 52 corresponds to the central nerve of a computer that performs processing such as computation and control required for the processing of the processing apparatus 16, and controls the entirety of the processing apparatus 16 in an integrated manner. The processor 52 executes control to realize various functions of the processing apparatus 16, based on a program such as system software, application software, or firmware stored in the storage device 54 such as a ROM or an auxiliary storage device. The processor 52 includes, for example, a central processing unit (CPU), a micro-processing unit (MPU), a digital signal processor (DSP), an application-specific integrated circuit (ASIC), a field-programmable gate array (FPGA), a graphics processing unit (GPU), or the like. Alternatively, the processor 52 may be a combination of two or more of them. In the processing apparatus 16, only a single processor 52 may be provided, or more than one processor 52 may be provided.

The processing apparatus 16 executes a process of causing various functions to be exhibited, by causing the processor 52 to execute programs, etc., stored in the storage device 54. Note that it is also preferable that a control program of the processing apparatus 16 is stored in a suitable server or cloud, instead of being stored in the storage device 54 of the processing apparatus 16. In such a case, the control program is executed through, for example, communication with the processor 52 included in the optical inspection system 10 via a communication interface. Specifically, the processing apparatus 16 may be included in the optical inspection system 10, and may be placed in a server or a cloud of a system of an inspection site of various types distanced from the optical inspection system 10. Thus, it is also preferable that an optical inspection program stored in a server or a cloud is executed through communication with the processor 52 included in the optical inspection system 10 via a communication interface, instead of such a program being stored in the storage device 54. Accordingly, the processor 52 (processing apparatus 16) may execute an optical inspection program (optical inspection algorithm), to be described later. The position of the server may be within the country, or may be abroad.

The processor 52 (processing apparatus 16) may control, for example, the conveying speed of the subject S by the conveyor portion 12, the timing of light emission of the light source portion 32 of the illumination portion 22, the timing of acquiring image data at the image sensor 44, and acquisition of image data from the image sensor 44, and may perform, for example, superimposition of multiple images by one or more of the four arithmetic operations, etc., and suitable image processing on an image.

In addition, the storage device 54 is, for example, an HDD or an SSD, but may be any device configured to store (save) one or more images.

Hereinafter, a basic operation of the optical inspection system 10 is described.

It is assumed that the subject S is being moved by the conveyor portion 12 at a predetermined speed in a direction (+X axis direction) perpendicular to the optical axis C of the imaging portion 24, and the processing apparatus 16 of the optical inspection system 10 acquires a plurality of images of the moving subject S. It is also assumed that the subject S is a flat surface, a curved surface, or a combination of them.

To begin with, for the purpose of simple description, a case is described in which the subject S is formed as a rectangular flat plate, and a star is depicted on the surface of the subject S. It is assumed that the surface of the subject S is, for example, a glossy surface.

Part (A) of FIG. 8 is a schematic diagram illustrating images I1, I2,..., In, which are acquired at suitable time intervals by the optical inspection apparatus 14 with the illumination light illustrated in FIG. 3 and FIG. 6. Part (B) of FIG. 8 illustrates a state in which the images I1, I2,..., In, illustrated in part (A) of FIG. 8, are appropriately shifted and rearranged to align the positions of the subject S of the images. Upper images in parts (A) and (B) of FIG. 8 were photographed earlier in time than lower images. Note that broken lines in parts (A) and (B) of FIG. 8 virtually indicate the position and size of the subject S relative to a field of view F, and are not acquired as images. Part (C) of FIG. 8 illustrates an entire image (inspection image) in which the images I1, I2,..., In, illustrated in part (B) of FIG. 8, are superimposed.

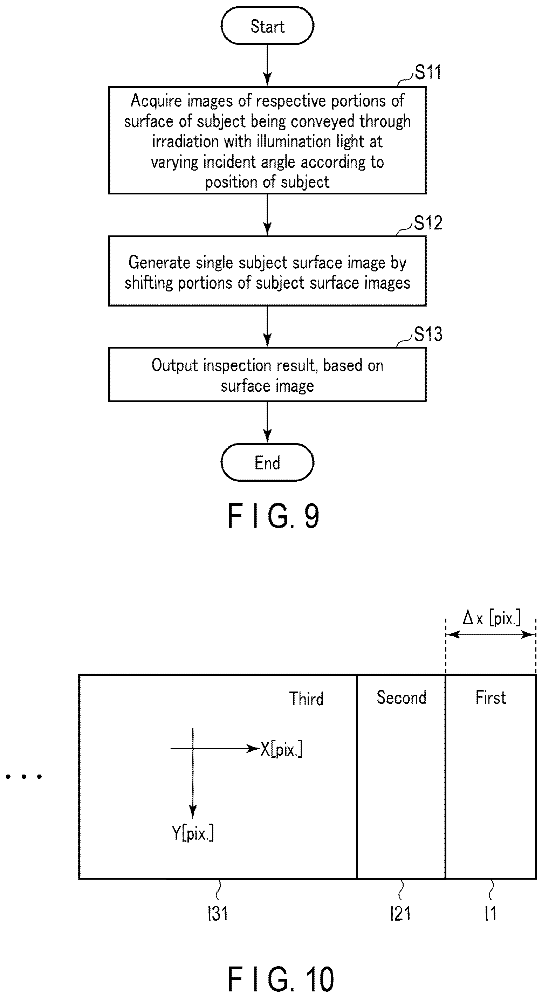

Five images "I1", "I2", "I3", "I4", and "I5" in parts (A) and (B) of FIG. 8 are not necessarily the first to fifth images that the processing apparatus 16 has caused the image sensor 44 of the imaging portion 24 to capture in a flow (see FIG. 9) to be described later, but the five images will be referred to as "I1", "I2", "I3", "I4", and "I5" for the purpose of convenience. For example, one or more additional images may be captured between the images I1 and I2. Specifically, in parts (A) and (B) of FIG. 8, the five images I1, I2, I3, I4, and I5 are arranged and illustrated, but one or more images may be acquired at different timings between, for example, the uppermost image I1 and the second top image I2. Similarly, one or more images may be acquired at different timings between the images I2 and I3, between the images I3 and I4, and between the images I4 and I5. It is preferable that such unillustrated images are suitably stored in the storage device 54. Here, for the convenience of explanation, it is assumed that the image I1 is a reference captured image. The reference captured image may be selected from among, for example, the images I2, I3, I4, and I5.

Part (C) of FIG. 8 illustrates a single surface composition image of the subject S constructed based on the images illustrated in part (B) of FIG. 8. The length in the lateral direction of the surface composition image Is in part (C) of FIG. 8 may be suitably set according to the length of the subject S along the X-axis direction.

FIG. 9 is a flowchart of processing performed by one or more processors 52 of the processing apparatus 16 of the optical inspection system 10.

As illustrated in FIG. 9, to start with, the processing apparatus 16 (one or more processors 52) acquires a plurality of images I1, I2, ..., and In of respective portions of the surface of the subject S being conveyed by the conveyor portion 12 obtained by irradiating, by the illumination portion 22 of the optical inspection apparatus 14, the surface of the subject S with illumination light at an incident angle that varies according to the position of the subject S, while causing the conveyor portion 12 to convey the subject S (step S11).

Of beams of light incident on the surface of the subject S from the illumination portion 22 of the optical inspection apparatus 14 along the ZX plane as illustrated in FIG. 1, FIG. 2, FIG. 3 and FIG. 6, a beam of light incident on the surface of the subject S along the optical axis C of the imaging portion 24 is approximately regularly reflected from the surface of the subject S, which is a flat surface (parallel to the XY plane), and is made incident on the image sensor 44 through the half mirror 34 and the image forming optical element 42. On the other hand, of the beams of light incident on the surface of the subject S from the illumination portion 22 of the optical inspection apparatus 14, if a beam of light deviated from the optical axis C of the imaging portion 24 is made incident on the surface of the subject S, such a beam of light is less likely to be made incident on the image forming optical element 42 of the imaging portion 24 by the law of reflection. If such a beam of light deviated from the optical axis C of the imaging portion 24 is made incident on the surface of the subject S, part of the reflection light from the surface of the subject S is not reflected toward the image forming optical element 42 of the imaging portion 24, and is deviated from the field of view F of the image forming optical element 42 and the image sensor 44. Thus, although the imaging portion 24 of the optical inspection apparatus 14 illustrated in FIGS. 1, 2, 3 and 6 can acquire an image of the surface of the subject S on the optical axis C of the imaging portion 24 and the vicinity of the optical axis C in the X-axis direction, it is difficult to obtain an image of a portion of the surface of the subject S deviated from the optical axis C and the vicinity thereof in the X-axis direction. Specifically, although the image of the surface of the subject S on the optical axis C of the imaging portion 24 and the vicinity of the optical axis C in the X-axis direction can be obtained as an image of the surface of the subject S, the portion of the surface of the subject S deviated from the optical axis C and the vicinity thereof in the X-axis direction appears black, for example, since light is not made incident on the imaging portion 24 from the portion deviated from the optical axis C and the vicinity thereof in the X-axis direction.

That is, of the beams of illumination light (parallel beams) toward the surface of the subject S in the ZX plane of the optical inspection apparatus 14, a beam of light reflected toward the image forming optical element 42 of the imaging portion 24 is imaged by the imaging portion 24 as a regular reflection component according to the law of reflection.

On the other hand, of the beams of light incident on the surface of the subject S from the illumination portion 22 (not illustrated) of the optical inspection apparatus 14 along the YZ plane, as illustrated in FIG. 6, diffusion light incident on the surface of the subject S along the optical axis C of the imaging portion 24 is made incident on the image sensor 44 through the half mirror 34 and the image forming optical element 42. In addition, the light incident on the surface of the subject S so as to be deviated from the optical axis C of the imaging portion 24 is diffusion light, and is thus made incident on the image sensor 44 through the half mirror 34 and the image forming optical element 42. Thus, in the example illustrated in FIG. 6, the imaging portion 24 obtains not only an image of the optical axis C of the imaging portion 24 and the vicinity thereof in the Y-axis direction, but also an image of a portion deviated from the optical axis C along the Y-axis direction.

Accordingly, if the subject S is a flat plate and the surface of the subject S is a flat surface, as illustrated in FIGS. 3 and 6, each of the images I1, I2, I3, I4, and I5 of the surface of the subject S that can be acquired by the optical inspection apparatus 14 is a part of the field of view F of the image sensor 44 in the X-axis direction, as illustrated in FIG. 8. Here, the image sensor 44 can obtain an image of the entire field of view F of the image sensor 44 in the Y-axis direction in the corresponding X-axis range.

Herein, the processing apparatus 16 (one or more processors 52) is aware of the conveying direction and the conveying speed of the subject S being conveyed by the conveyor portion 12, as well as the position of the subject S on the conveyor portion 12. In addition, the processor 52 is aware of an acquisition time and an acquisition time interval (frame rate) of each of the images I1, I2, ..., and In.

The processing apparatus 16 (one or more processors 52) sets a reference image I1, shifts images I2, I3, I4, and I5 that have been picked up according to the conveying speed of the conveyor portion 12 from the acquired images (which are not limited to the images I2, I3, I4, and I5 illustrated in part (A) of FIG. 8 and may include images acquired between the images, but are assumed herein as images I2, I3, I4, and I5 for convenience) of the respective portions of the surface of the subject S by, for example, n×Δx (where n is a natural number), and composes at least one surface composition image Is of the subject S by superimposing the images I2, I3, I4, and 15 on the image I1 (step S12). At this time, each image is shifted by (n-1)×Δx in the -X direction by, for example, not shifting the first reference image I1, shifting the second image by 1×Δx in the -X direction, and shifting the third image by 2×Δx in the -X axis direction, thereby generating a single surface composition image Is (see part (C) of FIG. 8) of the subject S.

Herein, in a case where the processing apparatus 16 composes the surface composition image Is, the processing apparatus 16 sets a shift amount of each of the captured images I2, I3, ..., and In, based on the frame rate in the image sensor 44 of the imaging portion 24, the conveying speed of the subject S relative to the imaging portion 24, and the number of pixels of the image sensor 44 in a direction along the conveying direction of the subject S relative to the image sensor 44 of the imaging portion 24.

In this manner, the processing apparatus 16 rearranges the images I1, I2, I3, ..., captured by the imaging portion 24 as illustrated in FIG. 10, and performs addition processing, thereby generating a new single subject surface composition image Is of the subject S (see part (C) of FIG. 8) based on the positional relationship of the subject S.

An image 121 is created by shifting, for example, an image extraction portion of the image I2 by Δx from the image I1 in the -X axis direction, based on the relationship between the conveying direction, the conveying speed and the position of the subject S being conveyed by the conveyor portion 12, and the time of each of the images I1, I2, ..., and In. Similarly, an image I31 is created by shifting an image extraction portion of the image I3 by Δx from the image I2 in the -X axis direction. That is, an image extraction portion of the image I3 is shifted by 2×Δx from the image I1 in the -X axis direction. In this manner, each of the images I2, I3, ..., and In is sequentially shifted by Δx from the previous image in the -X axis direction. That is, the processing apparatus 16 creates images I21, I31, ..., and In1.

Thereafter, the images I21, I31, ..., and In1 created by the above-described image processing are superimposed on the image I1. This allows the processing apparatus 16 to create an image (composition image) Is relating to the surface of the subject S.

Note that a partial overlap may occur between the images, for example, between the images I1 and I2. In this case, the processing apparatus 16 subtracts one of the overlapping portions, or averages the pixel values of the overlapping portions. Thus, at a time of composing the surface composition image Is, the processing apparatus 16 superimposes the captured images I2,..., In on the reference captured image I1, based on a suitable one or more of the four arithmetic operations.

Assuming that the conveying direction of the subject S by the conveyor portion 12 is the X-axis direction, half of the field of view F of the imaging portion 24 is x₀, the number of pixels of the image sensor 44 in the conveying direction is nₘ+1, the frame rate of the image sensor 44 is f_{c}, and the conveying speed of the subject S is v, the processing apparatus 16 may superimpose the N+1-th acquired image (where N is a natural number) shifted in the -X axis direction by Δx on the previous, N-th acquired image. The shift amount Δx of each of the acquired images is obtained by Δx *=* (ν·nₘ)/(2x₀·f_{c}).

It is assumed, as an example, that x₀ = 50 mm, nₘ = 1000 pix, v = 100 m/s, and f_{c} = 50 fps. In this case, Δx = 20 pix. Accordingly, the processing apparatus 16 superimposes the images I2, I3,..., In on the reference image I1 after shifting the images I2, I3,..., In from the reference image I1 by Δx = 20pix×(n-1) in the -X direction, and can obtain a surface composition image Is (see part (C) of FIG. 8) of the subject S. Such an image Is is obtained not by diffusion light but by regularly reflected beams of illumination light that can be considered to be substantially collimated in the ZX plane.

The surface composition image Is of the subject S (see (C) of FIG. 8) is obtained by illumination light from a limited range of directions in the ZX plane. Accordingly, the optical inspection system 10 can acquire the surface composition image Is of the subject S that is not susceptible to light other than light that directly faces the surface of the subject S. The positional relationship between the subject S being conveyed and the optical inspection apparatus 14 changes momentarily. Thus, the positional relationship between the light that directly faces the surface of the subject S and the optical inspection apparatus 14 changes momentarily. Accordingly, an image In of the subject S at a certain point in time and an image In+1 of the subject S at another point in time differ. The processing apparatus 16 is configured to acquire, for example, an entire image Is of the surface of the subject S by setting Δx for the image of the subject S in relation to x₀, nₘ, ν, and f_{c} and by performing image processing of the images In, In+1.

Next, as illustrated in parts (A), (C) and (E) of FIG. 11, it is assumed that, as the subject S, an object including a symmetric part with respect to an axis (imaginary axis) parallel to the Z axis on a surface of an XY plane S0 (on an ZX plane) is inspected. Note that a normal line to the XY plane S0 is directed in the +Z axis direction. Specifically, it is assumed that the subject S is not a simple flat surface S0, but a projection-shaped, recess-shaped, or projection-and-recess-shaped part extending along the Z axis on the ZX plane is formed on the XY plane S0 in such a manner as to be symmetric with respect to the axis (imaginary axis) parallel to the Z axis. Here, the symmetric part includes a surface (inclined surface) S1 having a normal line directed in the +X axis direction and +Z axis direction, and a surface (inclined surface) S2 having a normal line directed in the -X axis direction and +Z axis direction. It is assumed that the inclined surfaces S1 and S2 have a cross section of an isosceles triangle that is symmetric with respect to the Z axis and the optical axis C. The inclined surface S1, S2 may be a curved surface or a combination of a flat surface and a curved surface, but the inclined surfaces S1 and S2 are formed symmetric with respect to an axis parallel to the Z axis.

As described above, it is assumed that the subject S is being moved by the conveyor portion 12 at a predetermined speed in the direction (+X axis direction) perpendicular to the optical axis C of the imaging portion 24, and the optical inspection system 10 acquires a plurality of images of the moving subject S.

In parts (A), (C) and (E) of FIG. 11, illustration of the illumination portion 22 is omitted. As illustrated in part (A) of FIG. 11, if the processing apparatus 16 causes beams of collimated illumination light to be radiated on the subject S, and causes the imaging portion 24 to photograph the subject S, the processing apparatus 16 acquires an image I1 as illustrated in, for example, part (B) of FIG. 11. Thus, at a time when the processing apparatus 16 causes collimated beams of illumination light to be radiated on the subject S, as illustrated in part (A) of FIG. 11, the surface of the subject S is illuminated as illustrated in part (B) of FIG. 11.

Similarly, as illustrated in part (C) of FIG. 11 after the passage of a predetermined time from part (A) of FIG. 11, if the processing apparatus 16 causes collimated beams of illumination light to be radiated on the subject S, and causes the imaging portion 24 to photograph the subject S, the processing apparatus 16 acquires an image I2 as illustrated in, for example, part (D) of FIG. 11. Thus, at a time when the processing apparatus 16 causes collimated beams of illumination light to be radiated on the subject S, as illustrated in part (C) of FIG. 11, the surface of the subject S is illuminated as illustrated in part (D) of FIG. 11. Similarly, as illustrated in part (E) of FIG. 11 after the passage of a predetermined time from part (C) of FIG. 11, if the processing apparatus 16 causes collimated beams of illumination light to be radiated on the subject S, and causes the imaging portion 24 to photograph the subject S, the processing apparatus 16 acquires an image I3 as illustrated in, for example, part (F) of FIG. 11. Thus, at a time when the processing apparatus 16 causes collimated beams of illumination light to be radiated on the subject S, as illustrated in part (E) of FIG. 11, the surface of the subject S is illuminated as illustrated in part (F) of FIG. 11.

If the positional relationship between the image I1 illustrated in part (B) of FIG. 11, the image I2 illustrated in part (D) of FIG. 11 and the image I3 illustrated in part (F) of FIG. 11, and, where necessary, an image (not illustrated) between the images illustrated in parts (B) and (D) of FIG. 11 and an image (not illustrated) between the images illustrated in parts (D) and (F) of FIG. 11, is rearranged as illustrated in FIG. 10 and the images are superimposed, an entire image Is of the images of the subject S is acquired, for example, as illustrated in part (G) of FIG. 11. However, in the entire image Is, a boundary between the flat surface S0 and the inclined surface S1, a boundary between the flat surface S0 and the inclined surface S2, and a boundary between the inclined surfaces S1 and S2 do not appear. The reason for this is that in the optical inspection, the total amount of brightness that the flat surface S0 undergoes, the total amount of brightness that the inclined surface S1 undergoes, and the total amount of brightness that the inclined surface S2 undergoes, become substantially equal, and the total amount of brightness of illumination light radiated on the flat surface S0, the total amount of brightness of illumination light radiated on the inclined surface S1, and the total amount of brightness of illumination light radiated on the inclined surface S2, become substantially equal. Accordingly, in a case of inspecting the subject S by the optical inspection apparatus 14, the difference in luminosity, that is, the difference in contrast, between the three surfaces S0, S1 and S2 decreases in the entire image Is. Thus, in the case where the subject S is the object including the part that is symmetric with respect to the axis (imaginary axis) parallel to the Z axis on the ZX plane on the XY plane S0, it is understood that the optical inspection of the subject S is difficult to perform, even if the entire image Is of the subject S is simply used.

Parts (A) to (C) of FIG. 12 illustrate, in a time-series manner, images I1, I2 and I3 acquired by the imaging portion 24 in a case where the subject S having a substantial body with a recess portion that is symmetric with respect to a Z axis on the ZX plane was inspected by the optical inspection apparatus 14. Note that the right side of parts (A) to (C) of FIG. 12 is the conveying direction (+X axis direction).

In part (A) of FIG. 12, a lower figure illustrates an enlarged view of a part boxed by a rectangle in an upper figure. Similarly, in part (B) of FIG. 12, a lower figure illustrates an enlarged view of a part boxed by a rectangle in an upper figure. In part (C) of FIG. 12, a lower figure illustrates an enlarged view of a part boxed by a rectangle in an upper figure. In part (A) of FIG. 12, a recess portion is present in a part indicated by a broken line in the lower figure, and the recess portion is a recess of about 40 µm in the Z-axis direction. In addition, part (D) of FIG. 12 illustrates an entire image Is obtained by superimposing the images I1, I2 and I3 in the processing apparatus 16. As regards the recess portion indicated by the broken line, in order to obtain the entire image Is, if a single surface image Is of the subject S is obtained by superimposing the images with a shift of n×Δx, it is understood that the recess portion does not appear in the entire image Is illustrated in part (D) of FIG. 12. In other words, it is understood that the contrast of the recess portion in relation to a flat surface area is substantially lost in the image Is.

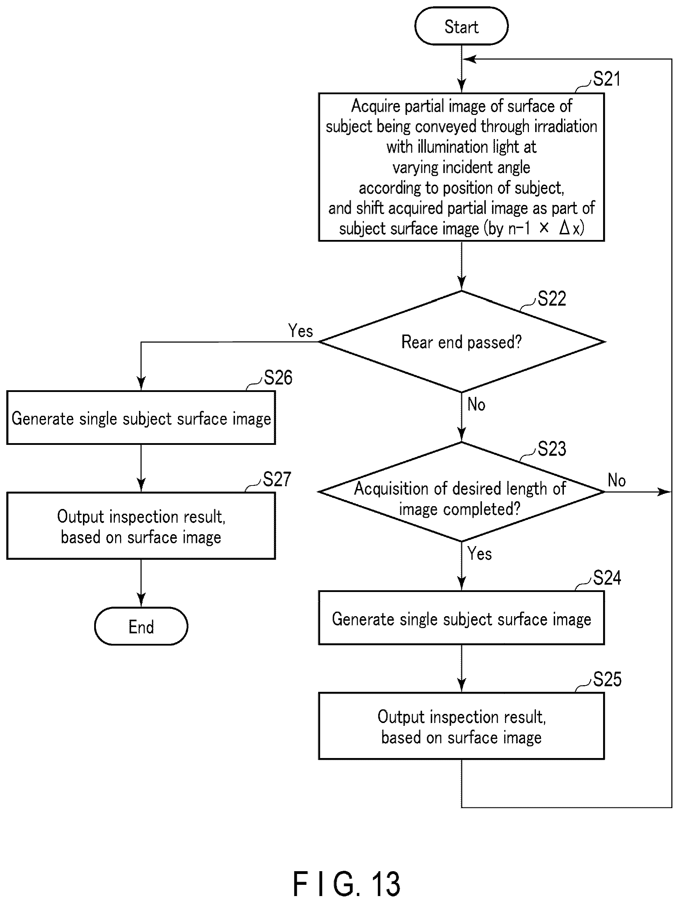

In the meantime, the subject S illustrated in parts (A) to (C) of FIG. 8 is depicted in a size that falls within the field of view F in its entirety. An example has been described in which the surface composition image Is is formed using suitable captured images I1, I2, ..., and In after completing capturing of images of the subject S. The processing apparatus 16 may be configured, for example, to sequentially superimpose captured images before completing the capturing of the images of the subject S, thereby finally composing an image Is in a predetermined length. Since a sheet-like member fed from a roll, for example, may have a length of tens or hundreds of meters in the conveying direction, there may be a case where the subject S may not fall within the field of view F in its entirety. In such a case, the processing apparatus 16 may generate a surface composition image Is of the subject S in a predetermined length in such a manner that an inspection range of the surface of the subject S is partitioned into, for example, a plurality of sections of a predetermined length along the conveying direction, and may perform processing to grasp a state of the surface of the subject S, based on a following flowchart illustrated in FIG. 13.

The processing illustrated in FIG. 13 is also applicable to a subject S whose entire length in the conveying direction of the subject S is suitably short, such that, for example, a surface composition image of the subject S falls within the field of view F of the image sensor 44, as illustrated in parts (A) to (C) of FIG. 8.

It is assumed that the processing apparatus 16 causes the conveyor portion 12 to move at a predetermined speed, and the conveyor portion 12 conveys the subject S in the +X axis direction at a predetermined speed.

The processing apparatus 16 acquires a partial image of the surface of the subject S by irradiating the surface of the subject S being conveyed with illumination light at an incident angle that varies according to the position, and sets the acquired partial image as a first surface composition image of the subject S (step S21).

Next, the processing apparatus 16 determines whether a rear end of the subject S has passed through the field of view F of the imaging portion 24 along the conveying direction (step S22). Such determination may be performed by the processing apparatus 16 detecting an output of a sensor disposed in the conveyor portion 12, or detecting an extraction status of an image of the imaging portion 24. Herein, the latter is adopted.

If the rear end of the subject S has not passed through the field of view F of the imaging portion 24 (step S22-No), the processing apparatus 16 determines whether or not a surface composition image Is of the subject S of a predetermined length or with a desired number of pixels along the conveying direction has been acquired (step S23). Herein, the predetermined length and the desired number of pixels along the conveying direction of the surface composition image Is of the subject S substantially refer to the length and the number of pixels, respectively, of a range along the X-axis direction from which light is made incident to the image sensor 44. That is, they refer to a desired length or a desired number of pixels along the X-axis direction at a time when a surface composition image Is of the subject S is formed. Accordingly, a portion of a length or pixels along the X-axis direction over which light is not made incident on the image sensor 44 and which has not been captured as an image is excluded.

The length of the subject S along the conveying direction can be calculated by, for example, setting a predetermined relationship between the number of pixels in the field of view F and dimensions of the subject S, and counting the number of times of acquisition of images in the present flow.

The processing apparatus 16 performs the processing of step S21 once again if a predetermined length or a desired number of pixels has not been reached (step S23-No), acquires a partial image of the surface of the subject S, and sets the acquired partial image as a second surface composition image of the subject S. Note that the second partial image of the surface of the subject S is superimposed on the first partial image of the surface of the subject S by shifting the second partial image of the surface of the subject S by Δx. It is preferable that the images partially overlap.

The processing apparatus 16 repeatedly performs the above-described operation and sets, if a subject surface composition image (sample surface composition image) Is of a desired length is obtained by superimposing an n-th image, for example, the image at that point in time as a surface composition image Is of the subject S (step S24), and outputs an inspection result, based on the composition image Is of the surface of the subject S (step S25).

Returning to the processing of step S21 once again, a new first surface image of the subject S is obtained. It is preferable that the new first surface image of the subject S partially overlaps a part of the single surface composition image Is of the subject S.

If the rear end of the subject S has passed through the field of view F of the imaging portion 24 (step S22-Yes), the processing apparatus 16 composes the image generated in step S21 as the surface composition image Is (step S26), and outputs an inspection result, based on the surface composition image Is of the subject S (step S27).

In this manner, according to the optical inspection system 10, an image (surface composition image Is of the subject S) that is equivalent to an actual surface image of the subject S can be acquired. At this time, one or more surface composition images Is with a proper length of the subject S can be acquired (step S24). In addition, a single surface composition image Is including the rear end of the subject S can be obtained (step S26).

Hereinafter, an optical inspection system 10 according to an approach is described. The same members or members having the same functions as the members of the optical inspection system 10 described in the above introduction are denoted by identical reference signs as much as possible, and a detailed description thereof is omitted.

### (First Approach)

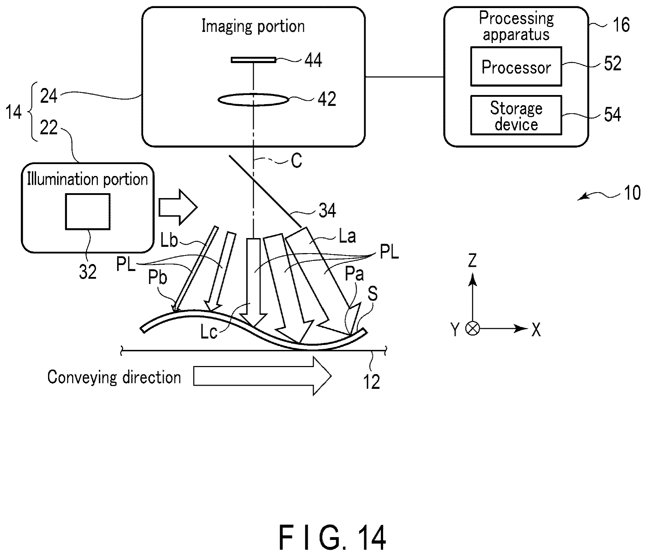

Referring to FIG. 14 to FIG. 16, an optical inspection system 10 according to a first approach is described.

FIG. 14 illustrates the optical inspection system 10 according to the first approach. As illustrated in FIG. 14, the optical inspection system 10 includes a conveyor portion 12 configured to convey a subject (sample) S, an optical inspection apparatus 14 configured to optically acquire an image of the subject S that is conveyed, and a processing apparatus 16 connected to the optical inspection apparatus 14 in either a wired manner or a wireless manner. Since the same conveyor portion 12 and imaging portion 24 of the optical inspection apparatus 14 as described in the introduction (see FIG. 1) can be used as those illustrated in FIG. 14, a description thereof is omitted here. In addition, since the same processing apparatus 16 as described in the introduction (see FIG. 1) can basically be used as the processing apparatus 16 illustrated in FIG. 14, a description thereof is omitted here.

In the present approach, for the purpose of simple description, it is assumed that the arrangement of light sources 32a, 32b and 32c of the light source portion 32 of the illumination portion 22 is the same as the illumination portion 22 illustrated in FIG. 2 described in the introduction. Accordingly, in the present approach, for example, white light is emitted from the light sources 32a, 32b, and 32c in the +X axis direction. The light source portion 32 has a large length in the depth direction in a line shape in the Y-axis direction, and emits white light in the +X axis direction. The light from each of the light sources 32a, 32b, and 32c is converted into, for example, collimated light in the ZX plane by the illumination lens 36. In addition, in the ZX plane including the optical axis C, the illumination light La from the light source 32a travels, as collimated light, in the +X axis direction and -Z axis direction with respect to the optical axis C. The illumination light Lb from the light source 32b travels, as collimated light, in the -X axis direction and -Z axis direction with respect to the optical axis C. The illumination light Lc from the light source 32c travels, as collimated light, in the -Z axis direction along the optical axis C. Accordingly, the illumination lights La, Lb and Lc from the light sources 32a, 32b and 32c travel in different directions in the ZX plane.

It is assumed that at a time when the reflection light of the illumination light La travels in an opposite direction to the direction in which the illumination light La travels toward the subject S, or in a direction in the vicinity of this opposite direction, at a time when the reflection light of the illumination light Lb travels in an opposite direction to the direction in which the illumination light Lb travels toward the subject S, or in a direction in the vicinity of this opposite direction, and at a time when the reflection light of the illumination light Lc travels in an opposite direction to the direction in which the illumination light Lc travels toward the subject S, or in a direction in the vicinity of this opposite direction, these reflection lights are imaged by the imaging portion 24 through the half mirror 34.

In the present approach, it is assumed that in a case where the illumination lights La, Lb and Lc from the illumination portion 22 are collimated lights or substantially collimated lights along the ZX plane, illumination is brighter with higher illuminance more on the +X axis direction side in the X-axis direction, and illumination is darker with lower illuminance more on the - X axis direction side, on the surface of the subject S on the conveyor portion 12. It should be noted, however, that shapes can be recognized at a time when the reflection light of the brightest illumination light on the +X axis direction side and the reflection light of the darkest illumination light on the -X axis direction side are imaged by the imaging portion 24.

As regards the illumination lights La, Lb and Lc of collimated lights or substantially collimated lights from the illumination portion 22, a dark part in which light is not incident may be either present or absent between the illumination light La and illumination light Lc, and a dark part in which light is not incident may be either present or absent between the illumination light Lc and illumination light Lb.

The relationship between the conveying speed of the conveyor portion 12, the ON/OFF of the illumination lights La, Lb and Lc, and the imaging timing of the imaging portion 24 is appropriately set in the processing apparatus 16, such that a proper object point Pa of the subject S on the ZX plane is once or more illuminated by each of the illumination lights La, Lb and Lc of collimated light and is once or more imaged by one of the illumination lights La, Lb and Lc at the timing of illumination. Similarly, the relationship between the conveying speed of the conveyor portion 12, the ON/OFF of the illumination lights La, Lb and Lc, and the imaging timing of the imaging portion 24 is appropriately set in the processing apparatus 16, such that a proper object point Pb, different from the object point Pa, on the ZX plane is once or more illuminated by each of the illumination lights La, Lb and Lc and is once or more imaged by one of the illumination lights La, Lb and Lc at the timing of illumination.

Thus, in the ZX plane including the optical axis C of the imaging portion 24 and the moving direction of the subject S, at a time of imaging by the imaging portion 24, the illumination portion 22 can radiate the first illumination light La at the first object point Pa on the surface of the subject S, and can radiate the second illumination light Lb traveling in a direction different from the first illumination light La at the second object point Pb different from the first object point Pa. The distribution of the first illumination light La and the second illumination light Lb is asymmetric in the ZX plane. In FIG. 14, a brightness distribution is asymmetric. The asymmetry of the brightness distribution can be realized by controlling the light amount of the light sources 32a, 32b and 32c by the processing apparatus 16.

Hereinafter, an operation of the optical inspection system 10 according to the first approach is described.

The processing apparatus 16 controls the light source portion 32 to maximize the light amount of the light source 32a among the white-light light sources 32a, 32b and 32c, ad to minimize the light amount of the light source 32b. The light amount of the light source 32c is set to be an intermediate light amount between the light amounts of the light sources 32a and 32b.

At this time, in the plane (ZX plane) including the optical axis C of the imaging portion 24 and the moving direction of the conveyor portion 12, at a time of imaging by the imaging portion 24, the illumination portion 22 can radiate the first illumination light La at the first object point Pa on the surface of the subject S, and can radiate the second illumination light Lb traveling in a direction different from the first illumination light La at the second object point Pb different from the first object point Pa, and the distribution of the first illumination light La and the second illumination light Lb is asymmetric in the plane (ZX plane). The distribution at this time is a brightness distribution.

In the present approach, it is assumed that in the illumination lights La, Lb and Lc that travel toward the subject S on the ZX plane and that are collimated lights and have a fan shape as a whole, the illumination more on the +X axis direction side than the optical axis C has a higher illuminance, and the illumination more on the -X axis direction side than the optical axis C has a lower illuminance. Note that it is assumed that the illuminance of the illumination light Lb more on the -X axis direction side than the optical axis C is not zero, but has such a proper brightness that regular reflection light can be recognized. It is assumed that the light source portion 32 is a point light source existing at the center of the fan shape, and the illumination lights La, Lb and Lc are radiated from the point light source. In addition, at a proper distance r from the point light source, for example, if the illuminances of the illumination lights La and Lb are compared, the ratio therebetween is, for example, 5:1, and if the illuminances of the illumination lights La and Lc are compared, the ratio therebetween is, for example, 5:3. Note that, not at the proper distance r from the point light source, but on the plane S0, if the illuminances of the illumination lights La and Lb are compared, the ratio therebetween may be, for example, 5:1, and if the illuminances of the illumination lights La and Lc are compared, the ratio therebetween may be, for example, 5:3.

To begin with, it is assumed that the subject S is formed as a rectangular flat plate, and a star is depicted on the surface of the subject S (see FIG. 8). It is assumed that the surface of the subject S (upper surface in FIG. 3) is, for example, a glossy surface. In this case, if the optical inspection system 10 according to the present approach is used, like the case of the optical inspection system 10 described in the introduction, the images I1, I2,..., In as illustrated in part (A) of FIG. 8 can be obtained. Accordingly, the processing apparatus 16 can acquire the entire image (inspection image) Is as illustrated in part (C) of FIG. 8.

Next, like parts (A), (C) and (E) of FIG. 11, the case is considered in which the subject S including the inclined surfaces S1 and S2 on the plane S0 is photographed to acquire the entire image Is.

The processing apparatus 16 controls the light source portion 32 and the image sensor 44, causes the illumination lights La, Lb and Lc of collimated lights to be radiated on the subject S as illustrated in part (A) of FIG. 15, and causes the imaging portion 24 to photograph the subject S, and thereby an image I1, for example, as illustrated in part (B) of FIG. 15 is acquired. Thus, at a time when the processing apparatus 16 causes the illumination lights of collimated lights to be radiated on the subject S as illustrated in part (A) of FIG. 15, the surface of the subject S is illuminated as illustrated in part (B) of FIG. 15. In the example illustrated in part (A) of FIG. 15, the illumination light La is reflected by the plane S0, travels toward the outside of the image forming optical element 42, and is not incident in the image forming optical element 42. The illumination light Lb is reflected by the inclined surface S1, and is incident in the image forming optical element 42. The illumination light Lc is reflected by the plane S0, and is incident in the image forming optical element 42. Here, there is a difference in brightness between the illumination lights La, Lb and Lc. Thus, in the image I1 illustrated in part (B) of FIG. 15, for example, a region Rc of the plane S0 illuminated by the illumination light Lc can be obtained as a brightest part, and a region Rb of the inclined surface S1 illuminated by the illumination light Lb can be obtained as a next brightest part.

Similarly, as illustrated in part (C) of FIG. 15 after the passage of a predetermined time from part (A) of FIG. 15, the processing apparatus 16 causes the illumination lights La, Lb and Lc to be radiated on the subject S, and causes the imaging portion 24 to photograph the subject S, and thereby an image I2 as illustrated in part (D) of FIG. 15 is acquired. Thus, at a time when the processing apparatus 16 causes the illumination lights of collimated lights to be radiated on the subject S as illustrated in part (C) of FIG. 15, the surface of the subject S is illuminated as illustrated in part (D) of FIG. 15. In the example illustrated in part (C) of FIG. 15, the illumination light La is reflected by the plane S0 (inclined surface S1), travels toward the outside of the image forming optical element 42, and is not incident in the image forming optical element 42. The illumination light Lb is reflected by a boundary (top portion) between the inclined surfaces S1 and S2 and is incident in the image forming optical element 42, but the light reflected by the inclined surfaces S1 and S2 travels toward the outside of the image forming optical element 42, and is not incident in the image forming optical element 42. The illumination light Lc is reflected by the plane S0 (inclined surface S2), travels toward the outside of the image forming optical element 42, and is not incident in the image forming optical element 42. In the image I2 illustrated in part (D) of FIG. 15, the boundary (top portion) between the inclined surfaces S1 and S2 illuminated by the illumination light Lc is obtained as a bright part. Here, although there is a difference in brightness between the illumination lights La, Lb and Lc, each of the surfaces S0, S1 and S2 illuminated by the illumination lights La, Lb and Lc is obtained as a dark part. Note that in the plane S0, regions Rc more on the ±Y axis direction than the inclined surfaces S1 and S2 are obtained as bright parts similar in brightness to the region Rc of part (B) of FIG. 15.

Similarly, as illustrated in part (E) of FIG. 15 after the passage of a predetermined time from part (C) of FIG. 15, the processing apparatus 16 causes the illumination lights La, Lb and Lc to be radiated on the subject S, and causes the imaging portion 24 to photograph the subject S, and thereby an image I3 as illustrated in part (F) of FIG. 15 is acquired. Thus, at a time when the processing apparatus 16 causes the illumination lights of collimated lights to be radiated on the subject S as illustrated in part (E) of FIG. 15, the surface of the subject S is illuminated as illustrated in part (F) of FIG. 15. In the example illustrated in part (E) of FIG. 15, the illumination light La is reflected by the inclined surface S2 and is incident in the image forming optical element 42. The illumination light Lb travels toward the outside of the image forming optical element 42 and is not incident in the image forming optical element 42. The illumination light Lc is reflected by the plane S0, and is incident in the image forming optical element 42. Here, there is a difference in brightness between the illumination lights La, Lb and Lc. Thus, in the image I3 illustrated in part (F) of FIG. 15, a region Ra of the inclined surface S2 illuminated by the illumination light La can be obtained as a brightest part, and a region Rc of the plane S0 illuminated by the illumination light Lc can be obtained as a next brightest part (step S11 in FIG. 9).

In addition, the region Ra illustrated in part (F) of FIG. 15 is brighter than the region Rb illustrated in part (B) of FIG. 15. The regions Rc in parts (B), (D) and (F) of FIG. 15 are equal in brightness. Besides, the region Ra is brighter than the region Rc, and the region Rc is brighter than the region Rb.

If the positional relationship between the image I1 illustrated in part (B) of FIG. 15, the image I2 illustrated in part (D) of FIG. 15 and the image I3 illustrated in part (F) of FIG. 15, and, where necessary, an image (not illustrated) between the images illustrated in parts (B) and (D) of FIG. 15 and an image (not illustrated) between the images illustrated in parts (D) and (F) of FIG. 15, is rearranged as illustrated in FIG. 10 and the images are superimposed, the processing apparatus 16 acquires an entire image Is of the images of the subject S, for example, as illustrated in part (G) of FIG. 15 (step S12 of FIG. 9).

Here, there is a difference between the illumination lights La, Lb and Lc. Therefore, in the entire image Is, the total amount of brightness (luminosity) of the region Rb by the irradiation (see parts (A) and (B) of FIG. 15) of the illumination light Lb of the inclined surface S1 is different from the total amount of brightness (luminosity) of the region Ra by the irradiation (see parts (E) and (F) of FIG. 15) of the illumination light La of the inclined surface S2. Thus, in the entire image Is, a difference in total amount of luminosity occurs between the regions Ra and Rb, that is, a different in total amount of luminosity occurs between the inclined surfaces S1 and S2, and, in the entire image Is, a difference in contrast occurs between the regions Ra and Rb, and the inclined surfaces S1 and S2 are distinguished as different regions.

In addition, in the entire image Is, there is a high possibility that the total amount of brightness (luminosity) by the irradiation (see parts (A) and (B) of FIG. 15) of the illumination light Lb on the inclined surface S1 is different from the total amount of brightness (luminosity) by the irradiation (see parts (A) to (F) of FIG. 15) of the illumination light Lc on the plane S0. Thus, in the entire image Is, a difference in total amount of luminosity occurs between the surfaces S0 and S1, that is, a difference in contact occurs therebetween, and the surfaces S0 and S1 are distinguished. Similarly, in the entire image Is, there is a high possibility that the total amount of brightness (luminosity) by the irradiation (see parts (E) and (F) of FIG. 15) of the illumination light La on the inclined surface S2 is different from the total amount of brightness (luminosity) by the irradiation (see parts (A) to (F) of FIG. 15) of the illumination light Lc on the plane S0. Thus, in the entire image Is, a difference in total amount of luminosity occurs between the surfaces S0 and S2, that is, a difference in contrast occurs therebetween, and the surfaces S0 and S2 are distinguished.

Accordingly, in the case where the subject S is photographed by the optical inspection apparatus 14 according to the present approach and the entire image Is is acquired, a difference in luminosity can be created between the surfaces S0, S1 and S2, that is, a different in contrast can be created therebetween. Thus, even in a case where the subject S includes a part that is formed symmetric on the ZX plane with respect to the axis (imaginary axis) parallel to the Z axis, an optical inspection of the subject S can be performed using the entire image Is of the subject S (step S13 of FIG. 9).

FIG. 16 illustrates a result in a case where, using the optical inspection system 10 according to the present approach, an optical inspection was similarly performed on the same subject S as illustrated in FIG. 12 on which the optical inspection was performed using the optical inspection system 10 described in the introduction, that is, a result of acquisition of images I1, I2 and I3.

In an image I1 in part (A) of FIG. 16, the illumination lights La, Lb and Lc are radiated to become brighter more on the right side, and are radiated to become darker more on the left side. Similarly, in an image I2 in part (B) of FIG. 16, the illumination lights La, Lb and Lc are radiated to become brighter more on the right side, and are radiated to become darker more on the left side. In an image I3 in part (C) of FIG. 16, the illumination lights La, Lb and Lc are radiated to become brighter more on the right side, and are radiated to become darker more on the left side. Part (A) of FIG. 16 illustrates the same location as the boxed part in the upper figure in part (A) of FIG. 12. Similarly, part (B) of FIG. 16 illustrates the same location as the boxed part in the upper figure in part (B) of FIG. 12. Part (C) of FIG. 16 illustrates the same location as the boxed part in the upper figure in part (C) of FIG. 12. In addition, part (D) of FIG. 16 illustrates an image Is in which parts (A) to (C) of FIG. 16 are superimposed. In the example of the image Is illustrated in part (D) of FIG. 16, compared to the example of image Is illustrated in part (D) of FIG. 12, a recess portion surrounded by a broken line can be more clearly recognized. Thus, using the image Is illustrated in part (D) of FIG. 16, the processing apparatus 16 can perform processing or the like for the optical inspection on the subject S, and can output the inspection result. Specifically, in the image Is, a difference can be created in contrast of the recess portion in relation to the flat surface region, and the recess portion can be recognized in the image Is. The inspection result in this case relates to, for example, whether a recess portion and/or a projection portion is present in relation to the flat surface. Whether a recess portion and/or a projection portion is present includes, for example, whether a flaw is present or absent on the surface as the flat surface.

According to the present approach, an optical inspection can be performed on the surface of the subject S, while relatively moving the subject S in the X-axis direction, the subject S including symmetric parts (for example, inclined surfaces S1 and S2) with respect to the axis (imaginary axis) parallel to the Z axis on the surface (ZX plane) of the XY plane S0. In addition, according to the present approach, an optical inspection can be performed on the surface of the subject S, while relatively moving the subject S in the X-axis direction, regardless of whether the subject S includes symmetric parts (for example, inclined surfaces S1 and S2) with respect to the axis (imaginary axis) parallel to the Z axis on the surface (ZX plane) of the XY plane S0.

Accordingly, the optical inspection apparatus 14 according to the present approach includes the imaging portion 24 defining the optical axis C, and configured to acquire a plurality of images by repeatedly photographing the subject S on the optical axis C, the subject S moving relative to the optical axis C in the moving direction that is a predetermined axial direction, in such a manner as to cross the optical axis C; and the illumination portion configured to radiate, in the plane including the optical axis C of the imaging portion 24 and the moving direction, at a time of imaging by the imaging portion 24, the first illumination light La at the first object point Pa on the surface of the subject S, and the second illumination light Lb traveling in a direction different from the first illumination light La at the second object point Pb different from the first object point Pa, the distribution of the first illumination light La and the second illumination light Lb being asymmetric in the above-described plane. In addition, the above-described asymmetric distribution is a brightness distribution.

By setting the illumination lights La and Lb from the illumination portion 22 to be asymmetric in the above-described plane, even if a symmetric region is present in the above-described plane, the symmetric region can be recognized as a difference in brightness (difference in contrast) by the entire image Is at a time when a plurality of images are captured by the imaging portion 24. Thus, there can be provided the optical inspection apparatus 14 that can inspect the surface of the subject S that relatively moves and includes various surface shapes.

In addition, the illumination portion 22 is configured to radiate, in the above-described plane, the illumination lights La, Lb and Lc including the first illumination light La and the second illumination light Lb on the subject S, as the lights each being collimated light and spreading in a fan shape as a whole to the subject S.

Thus, in a case where a normal direction of a flat surface or a curved surface has a relation of being opposed to the illumination light, the related region is photographed as an image. Therefore, each of regions of the surface of the subject S can be photographed by any one of a series of acquired images.

The optical inspection system 10 includes the optical inspection apparatus 14, and the processing apparatus (controller) 16 configured to control the illumination portion 22 and the imaging portion 24. The processing apparatus (controller) 16 acquires the inspection image of the subject S by shifting and superimposing at least one of a plurality of images.

Thus, the inspection image Is, such as the entire image, can automatically be acquired.

The optical inspection system 10 includes the optical inspection apparatus 14, and the conveyor portion 12 configured to move the subject S and the optical inspection apparatus 14 relative to each other in the conveying direction.

Thus, the optical inspection of the subject S can be performed while the subject S and the optical inspection apparatus 14 are being moved relative to each other by the conveyor portion 12.

An optical inspection method includes radiating, in the plane including the optical axis C of the imaging portion 24 and the moving direction of the subject (object) S moving in the moving direction of one axial direction relative to the optical axis C, while moving the subject S illuminated with the illumination light from the illumination portion 22 in the moving direction relative to the optical axis C, the first illumination light La at the first object point Pa on the surface of the subject S, and the second illumination light Lb traveling in a direction different from the first illumination light La at the second object point Pb different from the first object point Pa, the distribution of the second illumination light Lb being asymmetric to the distribution of the first illumination light La in the above-described plane; acquiring a plurality of images by repeatedly photographing the subject S on the optical axis C; and acquiring the inspection image Is by shifting and superimposing at least one of the images In. In addition, the above-described asymmetric distribution is a brightness distribution.

By setting the illumination lights La and Lb from the illumination portion 22 to be asymmetric in the above-described plane, even if a symmetric region is present in the above-described plane, the symmetric region can be recognized as a difference in brightness (difference in contrast) by the entire image Is at a time when a plurality of images are captured by the imaging portion 24. Thus, there can be provided the optical inspection method that can inspect the surface of the subject S that relatively moves and includes various surface shapes.

The optical inspection method includes outputting an inspection result of the subject S, based on the inspection method Is.

It is thus possible to make a user or the like to recognize the state of the subject S of the inspection target, and to appropriately select a destination of the subject S.

An optical inspection program causes a computer (processing apparatus) 16 to execute radiating, in the plane including the optical axis C of the imaging portion 24 and the moving direction of the subject S moving in the moving direction of one axial direction relative to the optical axis C, while moving the subject S illuminated with the illumination light from the illumination portion 22 in the moving direction relative to the optical axis C, the first illumination light La at the first object point Pa on the surface of the subject S, and the second illumination light Lb traveling in a direction different from the first illumination light La at the second object point Pb different from the first object point Pa, the distribution of the second illumination light Lb being asymmetric to the distribution of the first illumination light La in the above-described plane; causing the imaging portion 24 to acquire a plurality of images In by repeatedly photographing the subject S on the optical axis C in accordance with illumination of the first illumination light La and second illumination light Lb; and acquiring the inspection image Is by shifting and superimposing at least one of the images In. In addition, the above-described asymmetric distribution is a brightness distribution.

By setting the illumination lights La and Lb from the illumination portion 22 to be asymmetric in the above-described plane, even if a symmetric region is present in the above-described plane, the symmetric region can be recognized as a difference in brightness (difference in contrast) by the entire image Is at a time when a plurality of images are captured by the imaging portion 24. Thus, there can be provided the optical inspection program that can inspect the surface of the subject S that relatively moves and includes various surface shapes.

The optical inspection program causes the computer (processing apparatus) 16 to execute outputting an inspection result of the subject S, based on the inspection method Is.

It is thus possible to make a user or the like to recognize the state of the subject S of the inspection target, and to appropriately select a destination of the subject S.

Therefore, according to the present approach, there can be provided the optical inspection apparatus 14, the optical inspection system 10, the optical inspection method, and the optical inspection program, which can inspect the surface of an object that relatively moves and includes various surface shapes.

### (Modification)

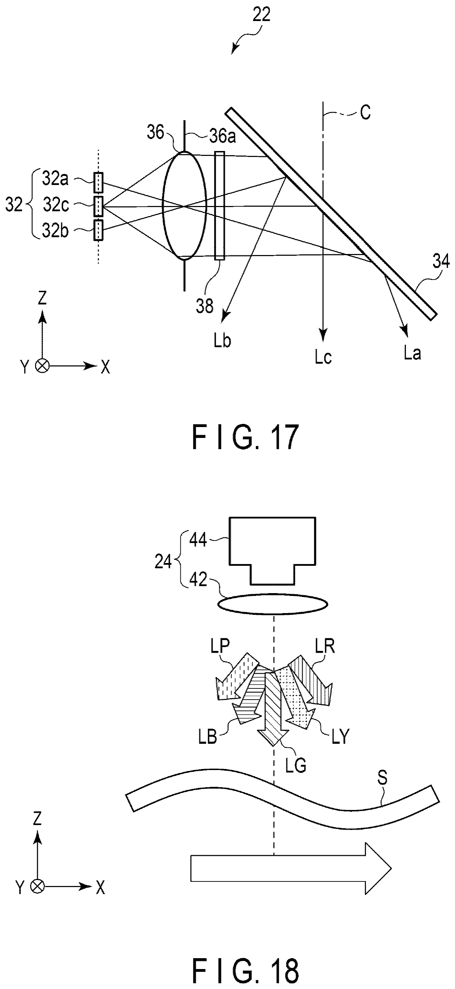

Referring to FIG. 17, a modification of the illumination portion 22 is described.

The illumination portion 22 illustrated in FIG. 17 includes a filter 38 having a higher transmittance more on the +Z axis direction side and having a lower transmittance more on the -Z axis direction side. In this case, the amounts of light from the light sources 32a, 32b and 32c are set to be constant, the illumination lights La, Lb and Lc of collimated lights are made to pass through the filter 38, and are reflected by the half mirror 34, thus being radiated on the subject S. Therefore, the illumination portion 22 can set the brightness distribution of the first illumination light La and second illumination light Lb to be asymmetric in the ZX plane.

FIG. 17 illustrates an example in which the filter 38 is disposed between the illumination lens 36 and the half mirror 34, but the filter 38 may be disposed between the light source portion 32 and the illumination lens 36. Thus, the illumination portion 22 can set the brightness distribution of the first illumination light La and second illumination light Lb to be asymmetric in the ZX plane.

In the case of setting the light amounts of the light sources 32a, 32b and 32c to be constant, the light source portion 32 may use an area emission light source, in place of the light sources 32a, 32b and 32c. In this case, although fan-shaped light beams are obtained, the light beams are converted into collimated light through the filter 38, and radiated on the subject S. Note that in this case, a dark part does not easily occur by the illumination light on the subject S.

### (Second Approach)

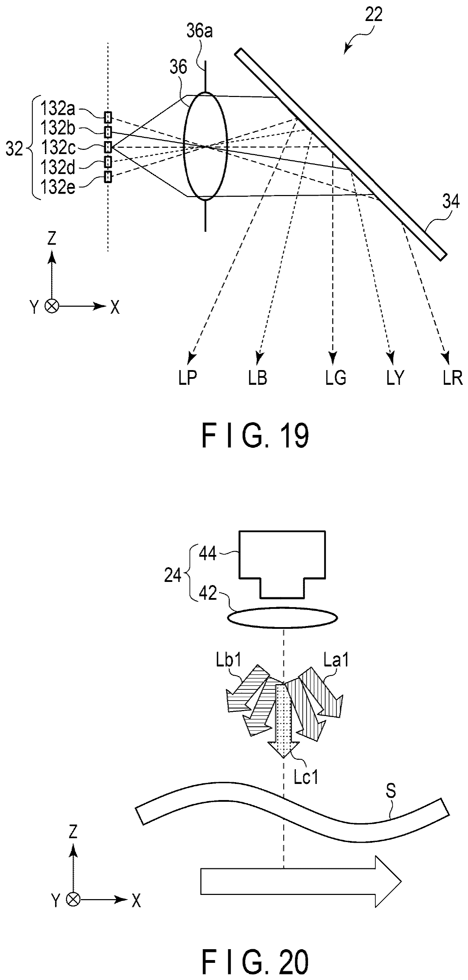

Referring to FIG. 18 and FIG. 19, an optical inspection system 10 according to a second approach is described. The present approach is a modification of the first approach, and the same members as described in the first approach are denoted by the same reference signs as much as possible, and a detailed description thereof is omitted.

FIG. 18 illustrates an optical inspection apparatus 14. In FIG. 18, illustration of an illumination portion 22 is omitted. FIG. 19 illustrates the illumination portion 22 of the optical inspection apparatus 14.

As illustrated in FIG. 19, the light source portion 32 includes five different light sources 132a, 132b, 132c, 132d, and 132e. The light source 132a emits, for example, red illumination light LR. The light source 132b emits, for example, yellow illumination light LY. The illumination light LY is composed of, for example, red light and green light. The light source 132c emits, for example, green illumination light LG. The light source 132d emits, for example, blue illumination light LB. The light source 132e emits, for example, purple illumination light LP. The illumination light LP is composed of, for example, red light and blue light.

In this case, such a configuration is adopted that the wavelength of light becomes longer as the direction of light radiation varies from the -X axis direction side toward the +X axis direction side. However, the illumination portion 22 may adopt any configuration if the distribution of the first illumination light LR and the second illumination light LP is asymmetric in the ZX plane, and the order of wavelengths is not limited to this. Furthermore, the same wavelength may be used for a plurality of directions.

Examples of the means for realizing such illumination lights having asymmetric wavelengths in the ZX plane include a method of inserting a color filter having spatially different transmission spectra between the subject and the light source. However, the means is not limited to this if wavelengths of light become asymmetric in the ZX plane.

As described in the introduction and in the first approach, it is preferable that the illumination lights LR, LY, LG, LB and LP are collimated lights traveling in different directions. In addition, the illumination lights LR, LY, LG, LB and LP spread in a fan shape as a whole on the ZX plane, and are radiated on the subject S.

At a time when the reflection light of the illumination light LR travels in an opposite direction to the direction in which the illumination light LR travels toward the subject S, or in a direction in the vicinity of this opposite direction, at a time when the reflection light of the illumination light LY travels in an opposite direction to the direction in which the illumination light LY travels toward the subject S, or in a direction in the vicinity of this opposite direction, at a time when the reflection light of the illumination light LG travels in an opposite direction to the direction in which the illumination light LG travels toward the subject S, or in a direction in the vicinity of this opposite direction, at a time when the reflection light of the illumination light LB travels in an opposite direction to the direction in which the illumination light LB travels toward the subject S, or in a direction in the vicinity of this opposite direction, and at a time when the reflection light of the illumination light LP travels in an opposite direction to the direction in which the illumination light LP travels toward the subject S, or in a direction in the vicinity of this opposite direction, these reflection lights are imaged by the imaging portion 24 through the half mirror 34.

Accordingly, the illumination portion 22 can radiate, in the ZX plane including the optical axis C of the imaging portion 24 and the moving direction, at a time of imaging by the imaging portion 24, the first illumination light LR at a first object point (a point in the region Ra on the surface S2 in part (F) of FIG. 15) on the surface of the subject (object) S, and the second illumination light LP traveling in a direction different from the first illumination light LR at a second object point (a point in the region Rb on the surface S1 in part (B) of FIG. 15) different from the first object point, the distribution of the first illumination light LR and the second illumination light LP being asymmetric in the ZX plane. The distribution is a wavelength distribution.

In this case, as described in the first approach, it is possible to acquire an image of a simple flat surface, as in the example illustrated in FIG. 8 in the introduction, or to inspect, as the subject S, an object including symmetric parts with respect to the axis (imaginary axis) parallel to the Z axis on the surface (on the ZX plane) of the XY plane S0, as in the example illustrated in FIG. 15 of the first approach. Specifically, in the acquired image Is, the symmetric surfaces S1 and S2 can be distinguished.

For example, a case is considered in which the illumination lights La, Lb and Lc illustrated in parts (A), (C) and (E) of FIG. 15 are replaced with the illumination lights LR, LY, LG, LB and LP.

In this case, the images I1, I2 and I3 are acquired, with the regions Rc in parts (B), (D) and (F) of FIG. 15 being green regions. The image I3 is acquired, for example, with the region Ra in part (F) of FIG. 15 being a red and/or yellow region. The image I1 is acquired, for example, with the region Rb in part (B) of FIG. 15 being a blue and/or purple region.

In addition, the processing apparatus 16 acquires the entire image Is of the images of the subject S, as illustrated in part (G) of FIG. 15. Here, there is a difference in color between the illumination lights LR, LY, LG, LB and LP. Therefore, in the entire image Is, the color of the region Rb by the irradiation (see parts (A) and (B) of FIG. 15) of the illumination light LB and/or illumination LP of the inclined surface S1 is different from the color of the region Ra by the irradiation (see parts (E) and (F) of FIG. 15) of the illumination light LR and/or illumination light LY of the inclined surface S2. Thus, in the entire image Is, a difference in color occurs between the regions Ra and Rb, that is, a different in hue occurs between the inclined surfaces S1 and S2, and, in the entire image Is, a difference in contrast occurs between the regions Ra and Rb, and the inclined surfaces S1 and S2 are distinguished.

In addition, in the entire image Is, the color by the irradiation (see parts (A) and (B) of FIG. 15) of the illumination light LB and/or illumination LP on the inclined surface S1 is different from the color by the irradiation (see parts (A) to (F) of FIG. 15) of the illumination light LG on the plane S0. Thus, in the entire image Is, a difference in hue occurs between the surfaces S0 and S1, that is, a difference in contact occurs therebetween, and the surfaces S0 and S1 are distinguished. Similarly, in the entire image Is, the color by the irradiation (see parts (E) and (F) of FIG. 15) of the illumination light LR and/or illumination LY on the inclined surface S2 is different from the color by the irradiation (see parts (A) to (F) of FIG. 15) of the illumination light LG on the plane S0. Thus, in the entire image Is, a difference in hue occurs between the surfaces S0 and S2, that is, a difference in contact occurs therebetween, and the surfaces S0 and S2 are distinguished.

Accordingly, in the case where the subject S is inspected by the optical inspection apparatus 14 according to the present approach, a difference in hue can be created between the surfaces S0, S1 and S2 in the entire image Is, that is, a different in contrast can be created therebetween. Thus, even in a case where the subject S includes a part that is formed symmetric on the ZX plane with respect to the axis (imaginary axis) parallel to the Z axis, an optical inspection of the subject S can be performed using the entire image Is of the subject S (step S13 of FIG. 9).

According to the present approach, an optical inspection can be performed on the surface of the subject S, while relatively moving the subject S in the X-axis direction, the subject S including symmetric parts (for example, inclined surfaces S1 and S2) with respect to the axis (imaginary axis) parallel to the Z axis on the surface (ZX plane) of the XY plane S0. In addition, according to the present approach, an optical inspection can be performed on the surface of the subject S, while relatively moving the subject S in the X-axis direction, regardless of whether the subject S includes symmetric parts (for example, inclined surfaces S1 and S2) with respect to the axis (imaginary axis) parallel to the Z axis on the surface (ZX plane) of the XY plane S0.

Therefore, according to the present approach, there can be provided the optical inspection apparatus 14, the optical inspection system 10, the optical inspection method, and the optical inspection program, which can perform an optical inspection of the surface of the subject S that can relatively move and includes a suitable shape.

### (Third Approach)

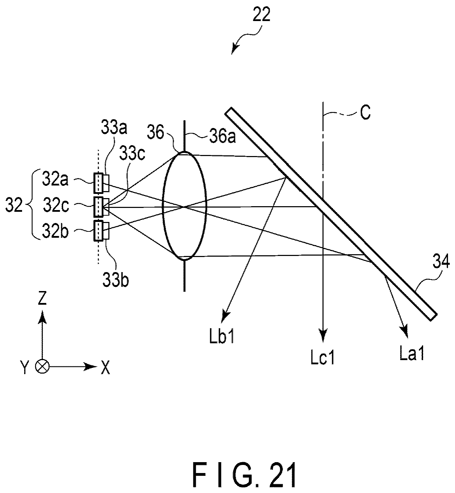

Referring to FIG. 20 and FIG. 21, an optical inspection system 10 according to a third approach is described. The present approach is a modification of the first approach and the second approach, and the same members as described in the first approach or the second approach are denoted by the same reference signs as much as possible, and a detailed description thereof is omitted.

FIG. 20 illustrates an optical inspection apparatus 14. In FIG. 20, illustration of an illumination portion 22 is omitted. FIG. 21 illustrates the illumination portion 22 of the optical inspection apparatus 14.

The illumination portion 22 includes, for example, three light sources 32a, 32b and 32c, like FIG. 2 described in the introduction. Here, a first polarizing plate 33a, which passes, for example, polarized light at 0° and blocks passage of polarized light at 45°, 90° and 135°, is disposed on a light radiation surface of the light source 32a. A second polarizing plate 33b, which passes, for example, polarized light at 90° and blocks passage of polarized light at 0°, 45° and 135°, is disposed on a light radiation surface of the light source 32b. A third polarizing plate 33c, which passes, for example, polarized light at 45° and blocks passage of polarized light at 0°, 90° and 135°, is disposed on a light radiation surface of the light source 32c.

Thus, the light source 32a substantially emits, for example, polarized light at 0° as illumination light La1. The light source 32b substantially emits, for example, polarized light at 90° as illumination light Lb1. The light source 32c substantially emits, for example, polarized light at 45° as illumination light Lc1.

As described in the introduction and in the first approach and the second approach, it is preferable that the illumination lights La1, Lb1 and Lc1 are collimated lights traveling in different directions. In addition, the illumination lights La1, Lb1 and Lc1 spread in a fan shape as a whole on the ZX plane, and are radiated on the subject S. It is assumed that regular reflection light of the illumination light La1, regular reflection light of the illumination light Lbl, and regular reflection light of the illumination light Lc1 are imaged by the imaging portion 24 through the half mirror 34.

Note that the illumination lights La1, Lb1 and Lc1 from the illumination portion 22 may be any illumination lights if the illumination lights are asymmetric in the ZX plane, and the order of polarization is not limited to the above-described polarization, and circular polarization or elliptic polarization may be used, or the same polarization may be used for a plurality of directions. Examples of the means for realizing such illumination lights La1, Lb1 and Lc1 having asymmetric polarization in the ZX plane include a method of inserting, as illustrated in FIG. 21, the polarizing plates 33a, 33b and 33c between the subject S and the light sources 32a, 32b and 32c, but the means is not limited to this if the polarization of light become asymmetric in the ZX plane.

As the image sensor 44 of the imaging portion 24 according to the present approach, use is made of, for example, a so-called polarization camera that can acquire images by distinguishing the luminances of polarized lights at 0°, 45°, 90°, and 135°. In addition, in the present approach, the imaging portion 24 is required to detect the difference in polarization angle, and for this purpose, aside from using the polarization camera, a polarizing plate may be inserted in an ordinary camera.

As described in the introduction and in the first approach and the second approach, it is preferable that the illumination lights La1, Lb1 and Lc1 are collimated lights traveling in different directions. In addition, the illumination lights La1, Lb1 and Lc1 spread in a fan shape as a whole on the ZX plane, and are radiated on the subject S.

It is assumed that at a time when the reflection light of the illumination light La1 travels in an opposite direction to the direction in which the illumination light La1 travels toward the subject S, or in a direction in the vicinity of this opposite direction, at a time when the reflection light of the illumination light Lb1 travels in an opposite direction to the direction in which the illumination light Lb1 travels toward the subject S, or in a direction in the vicinity of this opposite direction, and at a time when the reflection light of the illumination light Lc1 travels in an opposite direction to the direction in which the illumination light Lc1 travels toward the subject S, or in a direction in the vicinity of this opposite direction, these reflection lights are imaged by the imaging portion 24 through the half mirror 34.

Accordingly, the illumination portion 22 can radiate, in the ZX plane including the optical axis C of the imaging portion 24 and the moving direction, at a time of imaging by the imaging portion 24, the first illumination light La1 at a first object point (a point in the region Ra on the surface S2 in part (F) of FIG. 15) on the surface of the subject (object) S, and the second illumination light Lb1 traveling in a direction different from the first illumination light La1 at a second object point (a point in the region Rb on the surface S1 in part (B) of FIG. 15) different from the first object point, the distribution of the first illumination light La1 and the second illumination light Lb1 being asymmetric in the ZX plane. The distribution is a polarization distribution.

In this case, as described in the first approach, it is possible to acquire an image of a simple flat surface, as in the example illustrated in FIG. 8 described in the introduction, or to inspect, as the subject S, an object including symmetric parts with respect to the axis (imaginary axis) parallel to the Z axis on the surface (ZX plane) of the XY plane S0, as in the example illustrated in FIG. 15 of the first approach. Specifically, in the acquired image Is, the symmetric surfaces S1 and S2 can be distinguished.

For example, a case is considered in which the illumination lights La, Lb and Lc illustrated in parts (A), (C) and (E) of FIG. 15 are replaced with the illumination lights La1, Lb1 and Lc1.

In this case, the illumination light Lc1 is radiated on the region Rc in parts (B), (D) and (F) of FIG. 15, and the imaging portion 24 acquires polarized light at 45° that is reflection light of the illumination light Lc1 on the region Rc, and thus the images I1, I2 and I3 are acquired. The illumination light La1 is radiated on the region Ra in part (F) of FIG. 15, and the imaging portion 24 acquires polarized light at 0° that is reflection light of the illumination light La1 on the region Ra, and thus the image I3 is acquired. The illumination light Lb1 is radiated on the region Rb in part (B) of FIG. 15, and the imaging portion 24 acquires polarized light at 90° that is reflection light of the illumination light Lb1 on the region Rb, and thus the image I1 is acquired.

In addition, the processing apparatus 16 acquires the entire image Is of the images of the subject S, as illustrated in part (G) of FIG. 15. Here, there is a difference in polarization between the illumination lights La1, Lb1 and Lc1. Therefore, in the entire image Is, the polarization angle of the reflection light of the region Rb by the irradiation (see parts (A) and (B) of FIG. 15) of the illumination light Lb1 of the inclined surface S1 is different from the polarization angle of the reflection light of the region Ra by the irradiation (see parts (E) and (F) of FIG. 15) of the illumination light La1 of the inclined surface S2. Thus, in the entire image Is, a difference in polarization angle occurs between the regions Ra and Rb, that is, a different in polarization angle of acquired images occurs between the inclined surfaces S1 and S2, and, in the entire image Is, a difference in polarization angle occurs between the regions Ra and Rb, and the inclined surfaces S1 and S2 are distinguished.

In addition, in the entire image Is, the polarization angle by the irradiation (see parts (A) and (B) of FIG. 15) of the illumination light Lb1 on the inclined surface S1 is different from the polarization angle by the irradiation (see parts (A) to (F) of FIG. 15) of the illumination light Lc1 on the plane S0. Thus, in the entire image Is, a difference in polarization angle in acquired images occurs between the surfaces SO and S1, and the surfaces S0 and S1 are distinguished. Similarly, in the entire image Is, the polarization angle by the irradiation (see parts (E) and (F) of FIG. 15) of the illumination light La1 on the inclined surface S2 is different from the polarization angle by the irradiation (see parts (A) to (F) of FIG. 15) of the illumination light Lc1 on the plane S0. Thus, in the entire image Is, a difference in acquired polarization angle occurs between the surfaces S0 and S2, and the surfaces S0 and S2 are distinguished.

Accordingly, in the case where the subject S is inspected by the optical inspection apparatus 14 according to the present approach, a difference in acquired polarization angle in the images I1, I2 and I3 can be created between the surfaces S0, S1 and S2 in the entire image Is. Thus, even in a case where the subject S includes a part that is formed symmetric on the ZX plane with respect to the axis (imaginary axis) parallel to the Z axis, an optical inspection of the subject S can be performed using the entire image Is of the subject S (step S13 of FIG. 9).

According to the present approach, an optical inspection can be performed on the surface of the subject S, while relatively moving the subject S in the X-axis direction, the subject S including symmetric parts (for example, inclined surfaces S1 and S2) with respect to the axis (imaginary axis) parallel to the Z axis on the surface (ZX plane) of the XY plane S0. In addition, according to the present approach, an optical inspection can be performed on the surface of the subject S, while relatively moving the subject S in the X-axis direction, regardless of whether the subject S includes symmetric parts (for example, inclined surfaces S1 and S2) with respect to the axis (imaginary axis) parallel to the Z axis on the surface (ZX plane) of the XY plane S0.

Therefore, according to the present approach, there can be provided the optical inspection apparatus 14, the optical inspection system 10, the optical inspection method, and the optical inspection program, which can perform an optical inspection of the surface of the subject S that can relatively move and includes a suitable shape.

According to at least one of the above-described approaches, there can be provided an optical inspection apparatus, an optical inspection system, an optical inspection method, and an optical inspection program, which can inspect the surface of an object that relatively moves and includes various surface shapes.

The present disclosure also encompasses the following approaches of an optical inspection apparatus, an optical inspection system, an optical inspection method, and an optical inspection program:
1. An optical inspection apparatus comprising:
   an imaging portion defining an optical axis and configured to acquire a plurality of images by repeatedly photographing an object on the optical axis, the object moving relative to the optical axis in a moving direction that is a predetermined axial direction, in such a manner as to cross the optical axis; and
   an illumination portion configured to radiate, in a plane including the optical axis of the imaging portion and the moving direction, at a time of imaging by the imaging portion, first illumination light at a first object point on a surface of the object, and second illumination light traveling in a direction different from the first illumination light at a second object point different from the first object point, a distribution of the first illumination light and the second illumination light being asymmetric in the plane.
2. The optical inspection apparatus of clause 1, wherein the distribution is a brightness distribution.
3. The optical inspection apparatus of clause 1, wherein the distribution is a wavelength distribution.
4. The optical inspection apparatus of clause 1, wherein the distribution is a polarization distribution.
5. The optical inspection apparatus of any one of clauses 1 to 4, wherein the illumination portion is configured to radiate, in the plane, illumination lights including the first illumination light and the second illumination light on the object, as lights each being collimated light or being light regarded as collimated light and spreading in a fan shape as a whole to the object.
6. An optical inspection system comprising:
   the optical inspection apparatus of any one of clauses 1 to 4; and
   a controller configured to control the illumination portion and the imaging portion, wherein
   the controller is configured to acquire an inspection image of the object by shifting and superimposing at least one of the images.
7. An optical inspection system comprising:
   the optical inspection apparatus of any one of clauses 1 to 4; and
   a conveyor portion configured to convey the object and the optical inspection apparatus in such a manner that the object and the optical inspection apparatus move relative to each other in the moving direction.
8. An optical inspection method including:
   radiating, in a plane including an optical axis of an imaging portion and a moving direction of an object moving in the moving direction of one axial direction relative to the optical axis, while moving the object illuminated with illumination light from an illumination portion in the moving direction relative to the optical axis, first illumination light at a first object point on a surface of the object, and second illumination light traveling in a direction different from the first illumination light at a second object point different from the first object point, a distribution of the second illumination light being asymmetric to a distribution of the first illumination light in the plane;
   acquiring a plurality of images by repeatedly photographing the object on the optical axis; and
   acquiring an inspection image by shifting and superimposing at least one of the images.
9. The optical inspection method of clause 8, further comprising outputting an inspection result of the object, based on the inspection image.
10. An optical inspection program causing a computer to execute:
   radiating, in a plane including an optical axis of an imaging portion and a moving direction of an object moving in the moving direction of one axial direction relative to the optical axis, while moving the object illuminated with illumination light from an illumination portion in the moving direction relative to the optical axis, first illumination light at a first object point on a surface of the object, and second illumination light traveling in a direction different from the first illumination light at a second object point different from the first object point, a distribution of the second illumination light being asymmetric to a distribution of the first illumination light in the plane;
   causing the imaging portion to acquire a plurality of images by repeatedly photographing the object on the optical axis in accordance with illumination of the first illumination light and the second illumination light; and
   acquiring an inspection image by shifting and superimposing at least one of the images.
11. The optical inspection program of clause 10, wherein the optical inspection program causing the computer to further execute outputting an inspection result of the object, based on the inspection image.

While certain approaches have been described, these approaches have been presented by way of example only, and are not intended to limit the scope of the inventions. Indeed, the optical inspection apparatus, the optical inspection system, the optical inspection method, and the optical inspection program described herein may be embodied in a variety of other forms; furthermore, various omissions, substitutions and changes in the form of the approaches described herein may be made.

## Claims

1. An optical inspection apparatus comprising:
an imaging portion defining an optical axis and configured to acquire a plurality of images by repeatedly photographing an object on the optical axis, the object moving relative to the optical axis in a moving direction that is a predetermined axial direction, in such a manner as to cross the optical axis; and
an illumination portion configured to radiate, in a plane including the optical axis of the imaging portion and the moving direction, at a time of imaging by the imaging portion, first illumination light at a first object point on a surface of the object, and second illumination light traveling in a direction different from the first illumination light at a second object point different from the first object point, a distribution of the first illumination light and the second illumination light being asymmetric in the plane.

2. The optical inspection apparatus of claim 1, wherein the distribution is a brightness distribution.

3. The optical inspection apparatus of claim 1, wherein the distribution is a wavelength distribution.

4. The optical inspection apparatus of claim 1, wherein the distribution is a polarization distribution.

5. The optical inspection apparatus of any one of claims 1 to 4, wherein the illumination portion is configured to radiate, in the plane, illumination lights including the first illumination light and the second illumination light on the object, as lights each being collimated light or being light regarded as collimated light and spreading in a fan shape as a whole to the object.

6. An optical inspection system comprising:
the optical inspection apparatus of any one of claims 1 to 4; and
a controller configured to control the illumination portion and the imaging portion, wherein
the controller is configured to acquire an inspection image of the object by shifting and superimposing at least one of the images.

7. An optical inspection system comprising:
the optical inspection apparatus of any one of claims 1 to 4; and
a conveyor portion configured to convey the object and the optical inspection apparatus in such a manner that the object and the optical inspection apparatus move relative to each other in the moving direction.

8. An optical inspection method including:
radiating, in a plane including an optical axis of an imaging portion and a moving direction of an object moving in the moving direction of one axial direction relative to the optical axis, while moving the object illuminated with illumination light from an illumination portion in the moving direction relative to the optical axis, first illumination light at a first object point on a surface of the object, and second illumination light traveling in a direction different from the first illumination light at a second object point different from the first object point, a distribution of the second illumination light being asymmetric to a distribution of the first illumination light in the plane;
acquiring a plurality of images by repeatedly photographing the object on the optical axis; and
acquiring an inspection image by shifting and superimposing at least one of the images.

9. The optical inspection method of claim 8, further comprising outputting an inspection result of the object, based on the inspection image.

10. An optical inspection program causing a computer to execute:
radiating, in a plane including an optical axis of an imaging portion and a moving direction of an object moving in the moving direction of one axial direction relative to the optical axis, while moving the object illuminated with illumination light from an illumination portion in the moving direction relative to the optical axis, first illumination light at a first object point on a surface of the object, and second illumination light traveling in a direction different from the first illumination light at a second object point different from the first object point, a distribution of the second illumination light being asymmetric to a distribution of the first illumination light in the plane;
causing the imaging portion to acquire a plurality of images by repeatedly photographing the object on the optical axis in accordance with illumination of the first illumination light and the second illumination light; and
acquiring an inspection image by shifting and superimposing at least one of the images.

11. The optical inspection program of claim 10, wherein the optical inspection program causing the computer to further execute outputting an inspection result of the object, based on the inspection image.
